(19) Europäisches Patentamt
European Patent Office
Office européen des brevets

(11) **EP 2 496 611 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(21) Anmeldenummer: **10773307.3**

(22) Anmeldetag: **02.11.2010**

(51) Int Cl.:
*C08F 6/00* (2006.01)    *C08F 6/06* (2006.01)
*C08F 6/10* (2006.01)    *B01F 5/06* (2006.01)
*B01F 13/00* (2006.01)    *B01J 19/00* (2006.01)
*C08F 20/06* (2006.01)

(86) Internationale Anmeldenummer:
**PCT/EP2010/066583**

(87) Internationale Veröffentlichungsnummer:
**WO 2011/054789 (12.05.2011 Gazette 2011/19)**

(54) **VERFAHREN ZUR HERSTELLUNG VON WÄSSRIGEN POLYACRYLSÄURELÖSUNGEN**

METHOD FOR PRODUCING AQUEOUS POLYACRYLIC ACID SOLUTIONS

PROCEDE DE FABRICATION DE SOLUTIONS D'ACIDE DE POLYACRYLIQUE AQUEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2009 EP 09175014**

(43) Veröffentlichungstag der Anmeldung:
**12.09.2012 Patentblatt 2012/37**

(73) Patentinhaber: **BASF SE**
**67056 Ludwigshafen (DE)**

(72) Erfinder:
• **KLEINER, Matthias**
**68161 Mannheim (DE)**
• **LOTH, Wolfgang**
**67098 Bad Dürkheim (DE)**
• **BRYM, Markus**
**68163 Mannheim (DE)**
• **GÜTLICH-HAUK, Elke**
**67245 Lambsheim (DE)**
• **URTEL, Bolette**
**67240 Bobenheim-Roxheim (DE)**
• **WIRSCHEM, Ruth**
**68159 Mannheim (DE)**
• **DETERING, Jürgen**
**67117 Limburgerhof (DE)**

(56) Entgegenhaltungen:
**EP-A2- 1 500 666    WO-A1-2009/133186**

**Beschreibung**

Die vorliegende Erfindung betrifft ein Verfahren zur Herstellung von wässrigen Lösungen von Homo- oder Copolymeren der Acrylsäure mittels radikalischer Polymerisation von Acrylsäure sowie optional wasserlöslichen, monoethylenisch ungesättigten Comonomeren in wässrigem Medium in Gegenwart mindestens eines wasserlöslichen Initiators und mindestens eines wasserlöslichen Reglers, wobei man die Polymerisation mittels eines kontinuierlichen Verfahrens vornimmt, und wobei man nach der Polymerisation niedermolekulare Komponenten aus der erhaltenen, wässrigen Polymerlösung zumindest teilweise abtrennt. In einer bevorzugten Ausführungsform der Erfindung verwendet man für das Verfahren zumindest einen Reaktor und/oder Mischer mit Mikrostrukturen.

Es ist bekannt, Polyacrylsäure oder Polyacrylsäurecopolymere mit einer relativ niedrigen molaren Masse $M_n$ als Dispergierhilfsmittel und/oder Mahlhilfsmittel, insbesondere für Calciumcarbonatpartikel einzusetzen. Wässrige Calciumcarbonat-Suspensionen werden üblicherweise durch Nassmahlung von Calciumcarbonat unter Verwendung von Polycarboxylaten als Mahlhilfsmitteln hergestellt. Solche Calciumcarbonat-Suspensionen werden als Füllstoffe und Weißpigmente bei der Papierherstellung und in der Farbenindustrie eingesetzt. Für gute anwendungstechnische Eigenschaften ist eine hohe Feinheit des gemahlenen Pigments notwendig, die in einer möglichst kurzen Mahlzeit erreicht werden soll. Zudem müssen die Pigment-Suspensionen eine gute Lagerstabilität aufweisen, da zwischen dem Mahlprozess und der Weiterverarbeitung oftmals Standzeiten von mehreren Tagen auftreten und die Suspensionen über diesen Zeitraum pumpfähig bleiben müssen.

EP 313 483 A1 offenbart die Verwendung von Poly(meth)acrylsäure Homo- oder Copolymeren mit einem mittleren Molekulargewicht von 200 bis 1900 g/mol als Mahlhilfsmittel für Kalk.

DE 36 20 149 A1 offenbart die Herstellung von Poly(meth)acrylsäure Homo- oder Copolymeren unter Verwendung von wasserlöslichen Mercaptanen sowie deren Verwendung als Dispergierhilfsmittel. In den Beispielen werden Polyacrylsäuren mit einem zahlenmittleren Molekulargewicht $M_n$ von 770 g/mol bis 18000 g/mol offenbart.

US 6,395,813 B1 offenbart Phosphonat-terminierte Polyacrylsäuren mit einem gewichtsmittleren Molekulargewicht $M_w$ von 2000 g/mol bis 5800 g/mol.

DE 103 11 617 A1 offenbart die Verwendung von Polyacrylsäuren mit einem gewichtsmittleren Molekulargewicht $M_w$ von 5000 g/mol bis 30000 g/mol als Hilfsmittel für die Naßmahlung von Calciumcarbonat, wobei die Polyacrylsäuren mindestens zwei Kohlenstoffatome aufweisende, schwefelhaltige organische Endgruppen aufweisen.

US 4,509,987 und US 5,317,053 offenbaren Dispersionen von Calciumcarbonatpartikeln mit einer Partikelgröße von weniger als 2 $\mu$m in Wasser. Als Dispergierhilfsmittel wird ein Copolymer aus AMPS und mindestens 25 Gew. % Acrylsäure mit einem Molekulargewicht von 1000 bis 20000 g/mol eingesetzt.

Es ist auch bekannt, Polyacrylsäure zur Verwendung als Dispergierhilfsmittel mittels Verfahren zur kontrollierten radikalischen Polymerisation herzustellen, wie beispielsweise von J. Loiseau et al., Macromolecules 2003, 36, 3066 - 3077 beschrieben. Derartige Polyacrylsäuren weisen ein besseres Dispergierverhalten auf als nach konventionellen Methoden hergestellte Polyacrylsäure.

US 2004/0097674 sowie unsere ältere Anmeldung EP 2 182 011 A1 beschreiben Polyacrylsäure Homo- oder Copolymere, welche mittels RAFT- Polymerisation (Reversible Addition Fragmentation Transfer) hergestellt werden können. Nachteilig an der RAFT-Polymerisation zur Herstellung von wässrigen Polyacrylsäurelösungen mit vergleichsweise niedrigen Molekulargewichten ist einerseits der vergleichsweise hohe Preis der zur Polymerisation eingesetzten RAFT-Hilfsmittel, da RAFT-Hilfsmittel keine Katalysatoren sind, sondern stöchiometrisch in die Polymermoleküle eingebaut werden. Ein vergleichsweise niedriges Molekulargewicht bedeutet daher zwangsläufig, dass man das RAFT-Hilfsmittel in vergleichsweise hohen Mengen, u. U. mehreren Gewichtsprozent bezüglich der Acrylsäure einsetzen muss. Weiterhin verleihen die schwefelhaltigen RAFT-Hilfsmittel der Polyacrylsäurelösung einen nicht akzeptablen, schlechten Geruch. Die RAFT-Gruppen müssen daher vor der Anwendung in einem weiteren Verfahrensschritt desaktiviert werden. Dies kann beispielsweise durch aufwendiges und kostenintensives Umsetzen mit Aminen oder durch Oxidation mit Wasserstoffperoxid oder Ozon geschehen.

Es besteht daher nach wie vor Bedarf nach einem kostengünstigen Herstellverfahren für Polyacrylsäure mit niedrigem Molekulargewicht, welche gute Eigenschaften als Dispergierhilfsmittel aufweisen.

Wässrige Polymerlösungen oder Dispersionen können nach ihrer Herstellung durch radikalische Polymerisation neben dem gewünschten Polymer einen unerwünschten Anteil organischer Komponenten enthalten, die durch intensiven Geruch auffallen oder aus stofflicher Sicht unerwünscht sind, beispielsweise weil sie giftig oder gesundheitsschädlich sind, oder auch, weil sie in der beabsichtigten Anwendung stören. Bei derartigen Komponenten kann es sich um eingesetzte Regler, beispielsweise Mercaptane handeln. Derartige Komponenten werden daher üblicherweise vor dem Einsatz der Polymerlösungen oder Dispersionen entfernt.

Es ist bekannt, Polymerlösungen oder Dispersionen zur Entfernung derartiger flüchtiger, niedermolekularer Bestandteile, welche gegebenenfalls einen nicht akzeptablen Geruch zur Folge haben können, einer Nachbehandlung zur Desodorierung zu unterziehen. Hierbei kann es sich um eine chemische Desodorierung handeln, bei dem man störende Bestandteile chemisch umsetzt, beispielsweise mit Oxidationsmitteln behandelt. Es kann sich aber auch um eine physikalische Desodorierung handeln, bei der man die flüchtigen Bestandteile mittels physikalischer Methoden abtrennt. Dem Fachmann bekannte physikalische Methoden umfassen Dampfstrippen, wie beispielsweise von DE 1 248 943, DE 196 21 027 A1, DE 197 16 373 A1 oder EP 967 232 A1 beschrieben, oder Ultrafiltration, wie beispielsweise von US 5,055,197 oder EP 1 024 150 A1 offenbart.

EP 097 495 A1 offenbart ein kontinuierliches Verfahren zur Herstellung wasserlöslicher, mindestens 70 % Acrylsäure enthaltender Polymere unter Verwendung eines Reaktors, welcher einen geschlossenen Kreislauf aufweist. In den Kreislauf ist ein Mischer geschaltet, in den Monomer, Initiator und Regler mit der umlaufenden Mischung, welche wasserlösliches Polymer enthält, vermischt werden. Die Mischung durchströmt einen Wärmetauscher und polymerisiert. Nach der Polymerisation wird dem Kreislauf ein Teil der gebildeten Polymerlösung entnommen, und die im Kreislauf verbleibende Polymerlösung strömt im Kreislauf weiter zum bereits erwähnten Mischer, in dem der umlaufenden Polymerlösung wieder Monomer, Initiator und Regler zudosiert werden.

EP 1 500 666 A2 offenbart ein Verfahren zur Herstellung von Polymeren durch Fällungs- oder Lösungspolymerisation unter Verwendung $C_4$-$C_6$-Polymercaptopolyolen. Beschrieben wird die Polymerisation in einem wässrigen Lösungsmittel, insbesondere von (Meth)acrylsäure. Die Polymerisation erfolgt in einem herkömmlichen Reaktor mit Rührer.

Unsere ältere Anmeldung WO 2009/133 186 A1 offenbart ein Verfahren zur kontinuierlichen Herstellung von Polymeren durch radikalische Polymerisation, bei dem man einen Reaktor einsetzt, bei dem die Reaktionszone sowie die Mischzone Mikrostrukturen aufweisen. Zur Polymerisation werden mindestens ein radikalisch polymerisierbares Monomer, ein Initiator sowie ein Regler verwendet. Der Reaktionsaustrag kann einer Nachbehandlung, wie beispielsweise Nachpolymerisation, Desodorierung oder Neutralisation unterzogen werden. Die Beispiele offenbaren die Anwendung des Verfahrens zur Herstellung von Polyacrylsäure mit einem zahlenmittleren Molekulargewicht $M_n$ von 2900 g/mol bis 4900 g/mol und einer Uneinheitlichkeit $M_w / M_n$ von 1,9 bis 2,3 sowie deren Verwendung zur Herstellung von Calciumcarbonat-Dispersionen.

Aufgabe der Erfindung war es, ein verbessertes und kostengünstiges Verfahren zur Herstellung von wässrigen Polyacrylsäurelösungen zur Verwendung als Hilfsmittel für Dispersionen von Calciumcarbonat-Partikeln bereit zu stellen.

Dementsprechend betrifft die Erfindung ein Verfahren zur Herstellung von wässrigen Lösungen von Homo- oder Copolymeren der Acrylsäure mittels radikalischer Polymerisation von Acrylsäure sowie optional wasserlöslichen, monoethylenisch ungesättigten Comonomeren in wässrigem Medium in Gegenwart mindestens eines wasserlöslichen Initiators und mindestens eines wasserlöslichen Reglers, wobei

- die Menge Acrylsäure mindestens 50 Gew. % bzgl. der Summe aller Monomere zusammen und
- die zahlenmittlere molare Masse $M_n$ des Homo- oder Copolymers 1000 g/mol bis 20000 g/mol beträgt,

und wobei man die Polymerisation mittels eines kontinuierlichen Verfahrens vornimmt, welches mindestens die folgenden Schritte umfasst:

(la) kontinuierliches Eindosieren der Edukte sowie Wasser in eine Mischeinheit, umfassend mindestens einen Mischer mit Mikrostrukturen, wobei die charakteristische Dimension des Mischers (die kleinste zur Strömungsrichtung senkrechte Ausdehnung) im Bereich von 1 $\mu$m bis 1000 $\mu$m liegt, und Vermischen der Edukte in der Mischeinheit bei einer Temperatur $T_M$, sowie

(Ib) kontinuierliche radikalische Polymerisation, indem man das erhaltene wässrige Reaktionsgemisch durch mindestens eine Reaktionszone mit Mikrostrukturen hindurchleitet, wobei die charakteristische Dimension der Reaktionszone (die kleinste zur Strömungsrichtung senkrechte Ausdehnung) im Bereich von 0,1 $\mu$m bis 30 mm liegt und die Reaktionszone von einem Temperiermedium einer Temperatur $T_{Soll}$ im Bereich von 10°C bis 200°C temperiert wird, wobei das Reaktionsgemisch in einem -in Strömungsrichtung gesehen- ersten Bereich der Reaktionszone aufgeheizt wird, und wobei nach dem Durchlaufen der Aufheizzone die Temperaturdifferenz $\Delta T$ zwischen der Temperatur $T_{Soll}$ und der tatsächlichen Temperatur $T_R$ an jedem Punkt der Reaktionszone nach der besagten Aufheizzone $| T_R$- $T_{Soll} | \leq 50$ K beträgt, mit der Maßgabe, dass $T_{Soll}$ größer ist als die Mischtemperatur $T_M$,

und wobei man nach der Polymerisation in einem weiteren Verfahrensschritt (II) niedermolekulare Komponenten mit einer molaren Masse $M_n \leq 1000$ g/mol aus der erhaltenen, wässrigen Polymerlösung zumindest teilweise abtrennt.

Bevorzugt ist $T_{Soll}$ mindestens 10 K größer als $T_M$.

Bei den abzutrennenden niedermolekularen Komponenten handelt es sich insbesondere um die Reste des Reglers, Reste der Monomere und Oligomere aus Acrylsäure sowie ggf. weiteren Monomeren. In einer bevorzugten Ausführungsform der Erfindung erfolgt das Abtrennen niedermolekularer Komponenten aus der wässrigen Polymerlösung mittels Strippen mit Wasserdampf oder Ultrafiltration.

Überraschenderweise wurde gefunden, dass die Kombination einer kontinuierlichen Herstellung der Polyacrylsäure mit dem Abtrennen niedermolekularer Komponenten nicht nur den Geruch der wässrigen Polymerlösung deutlich vermindert, sondern dass darüber hinaus Polyacrylsäurehomo- oder -copolymere erhalten werden, welche deutlich bessere Eigenschaften bei der Verwendung zur Herstellung von anorganischen Pigmentsuspensionen, bevorzugt Calciumcarbonatsuspensionen aufweisen. Mit erfindungsgemäß hergestellten Polyacrylsäurehomo- oder-copolymeren lassen sich Pigmentsuspensionen, insbesondere Calciumcarbonatsuspensionen erhalten, welche eine deutlich niedrigere Viskosität aufweisen als bei der Verwendung von Polyacrylsäuren, bei denen flüchtige Komponenten unter Verwendung von Oxidationsmitteln zersetzt werden, die oxidierten Produkte aber in der Polymerlösung verbleiben.

Verzeichnis der Abbildungen:

Abb. 1: Schematische Darstellung einer bevorzugten Apparatur zur Ausführung des Verfahrens

Abb. 2: Schematische Darstellung eines typischen Verlaufs der Reaktionstemperatur $T_R$ innerhalb der Reaktionszone

Abb. 3: Schematische Darstellung eines typischen Verlaufs der Reaktionstemperatur $T_R$ innerhalb der Reaktionszone bei Zudosieren einer weiteren Komponente in die Reaktionszone

Zu der Erfindung ist im Einzelnen das Folgende auszuführen:

Das erfindungsgemäße Verfahren umfasst mindestens zwei Verfahrensschritte. In einem ersten Verfahrensschritt (I) werden die Acrylsäure sowie gegebenenfalls weitere wasserlösliche Comonomere mittels eines kontinuierlichen Verfahrens radikalisch polymerisiert, wobei Verfahrensschritt (I) mindestens zwei Teilschritte (Ia) und (Ib), nämlich das Mischen der Ausgangsmaterialien sowie das Polymerisieren umfasst. In einem weiteren -kontinuierlichen oder diskontinuierlichen- Verfahrensschritt (II) werden aus der erhaltenen Lösung der Acrylsäurehomo- oder-copolymere niedermolekulare Komponenten zumindest teilweise abgetrennt. Das Verfahren kann optional selbstverständlich noch weitere Verfahrensschritte oder Teilschritte umfassen.

Eingesetzte Ausgangsmaterialien:

Die Polymerisation der Acrylsäure sowie gegebenenfalls weiterer Copolymere wird in wässrigem Medium durchgeführt.

Die Begriffe "wässrige Lösung" bzw. "wässriges Medium" im Sinne dieser Erfindung sollen bedeuten, dass es sich bei den verwendeten Lösemitteln im Wesentlichen um Wasser handelt. Dies schließt die Anwesenheit von geringen Mengen anderer, mit Wasser mischbarer Lösemittel nicht aus. Bei weiteren Lösemitteln kann es sich beispielsweise um Alkohole wie Methanol, Ethanol oder Propanol handeln. Die Menge von Wasser sollte aber im Regelfalle mindestens 80 Gew. %, bevorzugt mindestens 90 Gew. % und besonders bevorzugt mindestens 95 Gew. % bezüglich der Summe aller Lösemittel zusammen betragen. Besonders bevorzugt wird als Lösemittel ausschließlich Wasser eingesetzt. Diese Vorgehensweise schließt aber nicht aus, dass dennoch nach der Polymerisation geringe Menge von Alkoholen aufgrund von Nebenreaktionen im wässrigen Medium vorhanden sein können.

Erfindungsgemäß können neben Acrylsäure optional weitere wasserlösliche, monoethylenisch ungesättigte Comonomere zur Synthese der Polymere eingesetzt werden, wobei die Menge an Acrylsäure mindestens 50 Gew. % bzgl. der Summe aller Monomere zusammen beträgt, bevorzugt mindestens 80 Gew. %, besonders bevorzugt 95 Gew. % und ganz besonders bevorzugt wird ausschließlich Acrylsäure als Monomer eingesetzt.

Durch die Verwendung von Comonomeren lassen sich die Eigenschaften der Acrylsäure-polymere verändern. Beispiele geeigneter monoethylenisch ungesättigter Comonomere umfassen andere Monomere mit sauren Gruppen, wie beispielsweise Methacrylsäure, Crotonsäure, Maleinsäure bzw. Maleinsäureanhydrid, Itaconsäure, Vinylphosphonsäure, Vinylsulfonsäure, 2-Acryl-amido-2-methyl-propansulfonsäure (AMPS), wasserlösliche (Meth)acrylsäurederivate wie beispielsweise Hydroxyethylacrylat, Hydroxypropylacylat, Hydroxybutylacrylat, (Meth)acrylamid, Vinylformamid, Alkali (3- methacryloyloxy)-propansulfonat, Dimethylaminoethylacrylat, 2-Acryloyloxyethyl-trimethylammoniumchlorid, Dimethylaminomethacrylat oder Polyethylen-glykolmethylether(meth)acrylat.

Acrylsäure sowie gegebenenfalls saure Comonomere können als freie Säuren oder auch ganz oder teilweise neutralisiert eingesetzt werden.

Erfindungsgemäß wird die radikalische Polymerisation in Gegenwart mindestens eines wasserlöslichen Reglers vorgenommen. Geeignete Regler für die radikalische Polymerisation sind dem Fachmann bekannt, und er trifft je nach den gewünschten Eigenschaften der Polyacrylsäure Homo- oder Copolymere eine geeignete Auswahl. Der Begriff "wasserlöslich" bedeutet in diesem Zusammenhang, dass der Regler zumindest bei der gewünschten Einsatzkonzentration in Wasser löslich sein soll. Selbstverständlich können auch Gemische zweier oder mehrerer Regler verwendet werden.

Regler werden vorzugsweise in einer Menge von 0,05 bis 25 Gew. % und besonders bevorzugt von 0,1 bis 10 Gew. %, bezogen auf das Gesamtgewicht der zur Polymerisation eingesetzten Monomere, eingesetzt.

Bevorzugt handelt es sich bei wasserlöslichen Reglern um schwefelhaltige oder phosphorhaltige, wasserlösliche Regler, insbesondere um Mercaptane oder Hypophosphite, besonders um schwefelhaltige, wasserlösliche Regler.

Verbindungen dieser Art sind beispielsweise anorganische Hydrogensulfite, Disulfite und Dithionite oder organische Sulfide, Disulfide, Polysulfide, Sulfoxide und Sulfone. Dazu zählen Di-n-butylsulfid, Di-n-octylsulfid, Diphenylsulfid, Thiodiglykol, Ethylthioethanol, Diisopropyldisulfid, Di-n-butyldisulfid, Di-n-hexyldisulfid, Diacetyldisulfid, Diethanolsulfid, Di-t-butyltrisulfid, Dimethylsulfoxid, Dialkylsulfid, Dialkyldisulfid und/oder Diarylsulfid.

Bevorzugt sind als Regler mono-, bi- und polyfunktionale Mercaptane, Mercaptoalkohole und/oder Mercaptocarbonsäuren. Beispiele für diese Verbindungen sind Allylthioglykolate, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Mercaptobernsteinsäure, Thioglycerin, Thioessigsäure, Thioharnstoff und Alkylmercaptane wie n-Butylmercaptan, n-Hexylmercaptan oder n-Dodecylmercaptan.

Beispiele für bifunktionale Regler, die zwei Schwefelatome in gebundener Form enthalten sind bifunktionale Thiole wie z. B. Dimercaptopropansulfonsäure (Natriumsalz), Dimercaptobernsteinsäure, Dimercapto-1-propanol, Dimercaptoethan, Dimercaptopropan, Dimercaptobutan, Dimercaptopentan, Dimercaptohexan, Ethylenglykol-bis-thioglykolat und Butandiol-bis-thioglykolat. Beispiele für polyfunktionale Regler sind Verbindungen, die mehr als zwei Schwefelatome in gebundener Form enthalten. Beispiele hierfür sind trifunktionale und/oder tetrafunktionale Mercaptane.

Beispiele für phosporhaltige Verbindungen, die als Regler eingesetzt werden können, umfassen Phosphate, Hydrogenphosphate, Phosphorige Säure, Hypophosphorige Säure sowie Salze davon, insbesondere Phosphite und/oder Hypophosphite.

Besonders bevorzugt zur Ausführung der vorliegenden Erfindung sind Mercaptoethanol, Natriumbisulfit und Natriumhypophosphit.

Erfindungsgemäß wird weiterhin mindestens ein wasserlöslicher Initiator bzw. ein wasserlösliches Initiatorsystem eingesetzt. Hierzu kommen grundsätzlich alle für die radikalische Polymerisation ethylenisch ungesättigter Monomere bekannten wasserlöslichen Initiatoren in Betracht, welche die radikalische Polymerisation thermisch starten können. Geeignete wasserlösliche Initiatoren sind dem Fachmann prinzipiell bekannt, und er trifft je nach den gewünschten Reaktionsbedingungen eine geeignete Auswahl. Er wird hierbei insbesondere darauf achten, thermische Initiatoren mit einer passenden Halbwertszeit bei der gewünschten Polymerisationstemperatur zu wählen. Selbstverständlich können auch Gemische verschiedener Initiatoren eingesetzt werden.

Die Menge an Initiator beträgt üblicherweise 0,1 bis 20 Gew. %, insbesondere 0,2 bis 10 Gew. % und speziell 0,5 bis 5 Gew. %, bezogen auf die Gesamtmenge der zu polymerisierenden Monomere.

Geeignete thermische Initiatoren umfassen insbesondere Initiatoren auf Basis organischer oder anorganischer Peroxide, Azo-Initiatoren oder Redox-Initiatorsysteme. Konkrete Beispiele geeigneter Polymerisationsinitiatoren sind im Folgenden angegeben:

Peroxidverbindungen: Hierzu zählen beispielsweise organische Peroxide und Hydroperoxide wie Acetylperoxid, Benzoylperoxid, Lauroylperoxid, tert-Butylperoxy-isobutyrat, Caproylperoxid, Cumolhydroperoxid, Di-tert.-Butylperoxid, tert.-Butylhydroperoxid, tert.-Amylhydroperoxid, tert.-Butylperoxy-acetat, tert.-Butylperoxy-benzoat, tert.-Butylperoxy-octoat, tert.-Butylperoxy-neodecanoat, tert.-Amylperoxy-pivalat, tert.-Butylperoxy-pivalat, Düsopropylperoxy-dicarbonat, Dicyclohexylperoxy-dicarbonat, Dicumylperoxid, Dibenzoylperoxide, Dilauroylperoxid; anorganische Peroxide wie Wasserstoffperoxid, Peroxodischwefelsäure und deren Salze wie Ammonium-, Natrium und Kaliumperoxodisulfat;

Azoverbindungen: Hierzu zählen beispielsweise 2,2'-Azobis[2-(2-imidazolin-2-yl)propan]dihydrochlorid, 2,2'-Azobis[2-(2-imidazolin-2-yl)propan]disulfate dihydrat, 2,2'-Azobis(2-methylpropionamidin)dihydrochlorid, 2,2'-Azobis[N-(2-carboxyethyl)-2-methylpropionamidin]hydrate, 2,2'-Azobis{2-[1-(2-hydroxyethyl)-2-imidazolin-2-yl]propan}dihydrochlorid, 2,2'-Azobis[2-(2-imidazolin-2-yl)propan], 2,2'-Azobis(1-imino-1-pyrrolidino-2-ethylpropan)dihydrochlorid, 2,2'-Azobis{2-methyl-N-[1,1-bis(hydroxymethyl)-2-hydroxyethl]propionamid}, 2,2'-Azobis[2-methyl-N-(2-hydroxyethyl)propionamid], 1-[(1-cyano-1-methylethyl)azo]formamid, Dimethyl 2,2'-azobis(2-methylpropionat), 1,1'-Azobis(cyclohexan-1-carbonitril) oder 4,4'-azobis(4-cyanopentansäure).

Redoxinitiatoren: Hierunter versteht man Initiatorsysteme, die ein Oxidationsmittel, beispielsweise ein Salz der Peroxodischwefelsäure, Wasserstoffperoxid oder ein organisches Peroxid wie tert.-Butylhydroperoxid und ein Reduktionsmittel enthalten. Als Reduktionsmittel enthalten sie vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind stickstoff- und phosphorhaltige Verbindungen wie phosphorige Säure, Hypophosphite und Phosphinate, Ditert-Butylhyponitrit und Dicumylhyponitrit, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersalze, Chromsalze oder Mangansalze enthalten wie beispielsweise das Redoxinitiatorsystem Ascorbinsäure/Eisen(II)sulfat/Natriumperoxodisulfat.

Besonders bevorzugt zur Ausführung der vorliegenden Erfindung sind Natriumperoxodisulfat, Kaliumperoxodisulfat, Ammoniumperoxodisulfat, 2,2'-Azobis[2-(2-imidazolin-2-yl)propan]dihydrochlorid, 2,2'-Azobis[2-(2-imidazolin-2-yl)propan]disulfate dihydrat, 2,2'-Azobis(2-methylpropionamidin)dihydrochlorid oder 2,2'-Azobis[2-(2-imidazolin-2-yl)propan.

Verwendete Apparaturen

Erfindungsgemäß wird radikalische Polymerisation mittels eines kontinuierlichen Verfahrens vorgenommen. Hierbei werden die eingesetzten Ausgangsmaterialien zunächst in Verfahrensschritt (Ia) kontinuierlich miteinander vermischt und anschließend in Verfahrensschritt (Ib) kontinuierlich polymerisiert. Zum Mischen und Polymerisieren kommen hierbei jeweils mindestens ein Mischer mit Mikrostrukturen sowie mindestens ein Reaktor mit Mikrostrukturen zum Einsatz.

Apparaturen mit Mikrostrukturen unterscheiden sich von herkömmlichen Apparaturen durch ihre charakteristische Dimension. Unter der charakteristischen Dimension einer durchströmten Einrichtung, z.B. eines Mischers oder eines Reaktors, versteht man im Rahmen der vorliegenden Erfindung die kleinste, zur Strömungsrichtung senkrechte Ausdehnung. Die charakteristische Dimension von Mikroapparaturen ist deutlich kleiner als die herkömmlicher Apparaturen. Sie kann insbesondere im Mikrometer- bis Millimeterbereich liegen. Im Vergleich zu herkömmlichen Reaktoren zeigen daher Mikroapparaturen in Bezug auf die ablaufenden Wärme- und Stofftransportvorgänge ein signifikant verschiedenes Verhalten. Durch das größere Verhältnis von Oberfläche zu Reaktorvolumen wird beispielsweise eine sehr gute Wärmezufuhr bzw. -abfuhr ermöglicht, weshalb sich auch stark endo- bzw. exotherme Reaktionen annähernd isotherm durchführen lassen.

Mischer:

Erfindungsgemäß werden die Edukte sowie Wasser in einer mindestens einen Mischer umfassenden Mischvorrichtung kontinuierlich miteinander vermischt. Hierbei werden Ströme der Edukte und Wasser in die Mischvorrichtung eingeleitet, und es wird ein Strom des wässrigen Reaktionsgemisches erhalten, welches in einer sich anschließenden Polymerisationsapparatur polymerisiert wird. Es kann selbstverständlich eine Kombination mehrerer Mischer eingesetzt werden. Dabei kann es sich prinzipiell um Mischer mit oder ohne Mikrostrukturen handeln, solange sich damit die nachstehend genannten Verfahrensparameter einhalten lassen.

Als "herkömmliche" oder "konventionelle" Mischer werden im Rahmen der vorliegenden Erfindung Mischer bezeichnet, die nicht über Mikrostrukturen -wie unten definiert- verfügen. Beispiele für geeignete Mischer ohne Mikrostrukturen sind sowohl konventionelle dynamische Mischer, wie beispielsweise Mischpumpen und kontinuierlich durchflossene Rührkessel, als auch in Rohrleitungen eingebaute Mischvorrichtungen wie beispielsweise Staubleche, Blenden, Strahlmischer, T- und Y-Stücke sowie statische Mischer.

Herkömmliche Mischer unterscheiden sich von Mischern mit Mikrostrukturen durch ihre charakteristische Dimension. Unter der charakteristischen Dimension einer durchströmten Einrichtung, z.B. eines Mischers, versteht man im Rahmen der vorliegenden Erfindung die kleinste, zur Strömungsrichtung senkrechte Ausdehnung. Die charakteristische Dimension eines Mikromischers ist deutlich kleiner als die eines herkömmlichen Mischers und liegt üblicherweise im Mikrometer- bis Millimeterbereich.

Herkömmliche Mischer weisen eine charakteristische Dimension im für das Mischen relevanten Bereich von mehr als 10 mm auf, Mischer mit Mikrostrukturen hingegen von höchstens 10 mm. Die charakteristische Dimension eines erfindungsgemäß verwendeten Mischers mit Mikrostrukturen liegt vorzugsweise im Bereich von 1 $\mu$m bis 10000 $\mu$m, besonders bevorzugt im Bereich 10 $\mu$m bis 5000 $\mu$m und insbesondere im Bereich von 25 $\mu$m bis 4000 $\mu$m. Die optimale charakteristische Dimension ergibt sich hierbei aus den Anforderungen an die Mischgüte und die Verstopfungsanfälligkeit der Mischvorrichtung. Mischer mit Mikrostrukturen werden auch als Mikromischer bezeichnet.

Beispiele für geeignete Mikromischer sind:

I statische Mischer

   1. laminare Diffusionsmischer

      a) "chaotisch-laminare" Mischer, wie beispielsweise T-Mischer, Y-Mischer, oder Zyklonmischer
      b) Multilaminationsmischer bzw. Interdigitalmischer

   2. laminare Diffusionsmischer mit konvektiver Quervermischung, wie beispielsweise geformte Mischkanäle oder Kanäle mit Sekundärstrukturen
   3. Split-Recombine-Mischer, wie beispielsweise Raupenmischer

II dynamische Mischer, wie beispielsweise Mischpumpen

III Kombinationen davon, oder

IV Turbulenzmischer

wobei diese jeweils den oben genannten Bedingungen für die charakteristischen Dimensionen genügen.

In einer geeigneten Ausführungsform werden Mischer mit Mikrostrukturen eingesetzt, die mindestens einen Mischkanal aufweisen. Das Mischen kann laminar, laminar-chaotisch oder turbulent erfolgen.

Im Folgenden werden erfindungsgemäß bevorzugte Mikromischer näher erläutert.

Bei laminaren Diffusionsmischern erfolgt die Vermischung von Teilströmen des Fluids, das an einer Mikrostruktur in eine Vielzahl mikroskopisch kleiner Strömungslamellen mit einer Dicke im Bereich von 10 bis 2000 $\mu$m, speziell 20 bis 1000 $\mu$m und insbesondere 40 bis 500 $\mu$m aufgefächert wurde, ausschließlich durch molekulare Diffusion senkrecht zur Hauptströmungsrichtung. Eine Auslegung des Mischers kann über die Fourier-Zahl Fo = $\tau/\tau_D$ erfolgen, welche das Verhältnis von Verweilzeit im Mischer zur Diffusionszeit zwischen den einzelnen Strömungslamellen darstellt.

Für die Diffusionszeit $T_D$ gilt dabei $T_D = \dfrac{s^2}{D}$, worin s für die halbe Strömungslamellendicke [m] und D für den Diffusionskoeffizienten [m$^2$/sec] steht. Dieses Verhältnis wird in der Regel größer als 1, bevorzugt größer als 2, besonders bevorzugt größer als 3 und insbesondere größer als 4 gewählt, um eine möglichst gute molekulare Vermischung der Stoffströme am Auslass des Mischers zu gewährleisten.

Chaotisch-laminare Diffusionsmischer können als einfache T- oder Y-Mischer oder als so genannte Multilaminationsmischer ausgeführt sein. Beim T- oder Y-Mischer werden die beiden (oder auch mehr als zwei) zu mischenden Teilströme einem Einzelkanal durch eine T- oder Y-förmige Anordnung zugeführt. Maßgebend für den transversalen Diffusionsweg $S_{Diff}$ ist hierbei die Kanalweite $\delta_K$. Für typische Kanalweiten zwischen 100 $\mu$m und 1 mm ergeben sich für Flüssigkeiten übliche Mischzeiten im Bereich von Sekunden bis Minuten. Werden, wie im vorliegenden Verfahren, Flüssigkeiten gemischt, so ist es vorteilhaft, den Mischvorgang zusätzlich, beispielsweise durch strömungsinduzierte Quervermischung, zu unterstützen.

Bei Multilaminationsmischern bzw. Interdigitalmischern werden die zu vermischenden Teilströme in einem Verteiler in eine große Anzahl von Mikrostromfäden aufgeteilt und am Austritt des Verteilers dann der Mischstrecke alternierend in Lamellen zugeführt. Für Flüssigkeiten erreicht man mit den klassischen Multilaminationsmischern Mischzeiten im Sekundenbereich. Da dies für manche Anwendungen (z. B. bei schnellen Reaktionen) nicht ausreichend ist, wurde das Grundprinzip dahingehend weiterentwickelt, dass die Strömungslamellen nochmals zusätzlich geometrisch oder hydrodynamisch fokussiert werden. Die geometrische Fokussierung wird durch eine Verengung in der Mischstrecke erreicht. Die hydrodynamische Fokussierung wird durch zwei Seitenströme erzielt, die den Hauptstrom senkrecht anströmen und so die Strömungslamellen weiter komprimieren. Durch die beschriebene Fokussierung lassen sich laterale Abmessungen der Strömungslamellen von wenigen Mikrometern realisieren, so dass selbst Flüssigkeiten innerhalb von einigen 10 ms gemischt werden können.

Als laminare Diffusionsmischer mit konvektiver Quervermischung können Mikromischer mit strukturierten Wänden eingesetzt werden. Bei Mikromischern mit strukturierten Wänden sind sekundäre Strukturen (Riefen oder Stege) auf den Kanalwänden angeordnet. Bevorzugt sind sie in einem bestimmten Winkel zur Hauptströmrichtung angeordnet, beispielsweise in einem Winkel von etwa 30° bis zu 90°. Im Falle trägheitsdominierter Strömungsbedingungen bilden sich hierdurch Sekundärwirbel aus, die den Mischprozess unterstützen.

In einer weiteren geeigneten Ausführung wird als Mischer mit Mikrostruktur ein Split-Recombine-Mischer eingesetzt. Split-Recombine-Mischer zeichnen sich durch Stufen aus wiederkehrender Trennung und Zusammenführung von Strömen aus. Zwei Bereiche eines ungemischten Fluidstroms (meistens geht man von zwei gleich großen Lamellen aus) werden in einer Stufe jeweils voneinander weg geführt, in jeweils zwei neue Bereiche zerteilt, und wieder zusammengeführt. Alle vier Bereiche werden so alternierend nebeneinander angeordnet, dass die Ursprungsgeometrie wieder hergestellt wird. In jeder dieser Stufen wird die Lamellenzahl also stufenweise verdoppelt und dadurch Lamellendicke und Diffusionsweg halbiert.

Beispiele für geeignete Split-Recombine-Mischer sind der Raupenmischer von der Firma IMM und der Caterpillar-Mischer von der Firma BTS-Ehrfeld.

Beispiele für geeignete dynamische Mikromischer sind beispielsweise Mikro-Mischpumpen.

Beispiele für bevorzugte statische Mikromischer sind insbesondere folgende laminare Diffusionsmischer:

- "chaotisch-laminare" Mischer, wie beispielsweise T- oder Y-Stücke mit einem sehr kleinen Kapillardurchmesser im Bereich von 100 $\mu$m bis 1500 $\mu$m und bevorzugt 100 $\mu$m bis 800 $\mu$m am Mischpunkt und Zyklonmischer;

- Multilaminationsmischer, wie beispielsweise die Schlitzplattenmischer LH2 und LH 25 oder größere Typen von der Firma Ehrfeld sowie die Interdigitalmischer SIMM und Starlam® von der Firma IMM;

- Mikromischer nach dem Multilaminationsprinzip mit überlagerter Dehnströmung, wie beispielsweise der SuperFocus Interdigital Mikrostrukturmischer SFIMM von der Firma IMM.

Turbulenzmischer beruhen auf dem Prinzip der turbulenten gegenseitigen Durchdringung von Flüssigkeitsstahlen. Hierbei kann es sich um frei fliegende Flüssigkeitsstrahlen handeln, welche durch Durchpressen der Flüssigkeit durch geeignete Düsen erzeigt werden können. Die Strahlen treffen aufeinander, wodurch die Vermischung bewirkt wird. Derartige Mischer sind auch als "Impinging -Jet Micromixer" bekannt. Weiterhin kann es sich um das Prinzip handeln, dass sich geführte Strahlen am Treffpunkt turbulent durchdringen. Ein derartiger Mischer besteht aus mehreren, feine Kanäle aufweisenden und übereinander angeordneten Platten. Zum Mischen wird ein Flüssigkeitsstrom mittels der Kanälen in viele Teilströme aufgeteilt und die Flüssigkeitsströme treffen die Flüssigkeitsströme darüber oder darunter gelegener Platten. Hierbei entstehen starke Mikro-Turbulenzen, welche für eine schnelle und gute Vermischung sorgen. Einzelheiten zu derartigen Mischern sind beispielsweise von WO 2005/018786 A1 offenbart.

Bei Mischern mit Mikrostrukturen ist es empfehlenswert, Filter vor den mikrostrukturierten Teilen der Mischer vorzusehen, um Verstopfungen durch partikuläre Verunreinigungen zu vermeiden, wenngleich dies nicht immer zwingend erforderlich ist.

Erfindungsgemäß erfolgt das Mischen der Edukte bei einer Temperatur $T_M$ unterhalb der gewünschten Reaktionstemperatur $T_{Soll}$ und weiterhin bevorzugt etwa bei Raumtemperatur. Zur Einhaltung der gewünschten Mischtemperatur können die eingesetzten Mischer mit einem geeigneten Temperiermedium in Kontakt stehen. Hierdurch kann gebildete Mischungswärme effizient abgeführt werden. Hierbei sollten Temperaturdifferenzen innerhalb des Mischraumes sowie Temperaturdifferenzen zwischen Temperiermedium und der Mischung im Mischraum möglichst klein sein. Im Regelfalle sollte $\Delta T$ innerhalb des Mischraumes nicht größer als 5 K sein.

Reaktionszone:

Unter einer Reaktionszone wird im Sinne der vorliegenden Erfindung ein Abschnitt eines Reaktors, in dem die Polymerisation abläuft, in Strömungsrichtung der flüssigen Stoffströme verstanden. Eine Reaktionszone kann innerhalb eines Teils eines Reaktors, innerhalb eines gesamten Reaktors oder innerhalb von zwei oder mehr Reaktoren angeordnet sein. In einer bevorzugten Ausführung befindet sich jede Reaktionszone in einem separaten Reaktor.

Bei den Reaktionszonen kann es sich prinzipiell um Reaktionszonen mit oder ohne Mikrostrukturen handeln, solange sich damit die nachstehend genannten Verfahrensparameter einhalten lassen.

Erfindungsgemäß wird wenigstens ein Reaktor mit wenigstens einer Reaktionszone mit Mikrostrukturen für die Polymerisation eingesetzt. Der Reaktor mit einer Reaktionszone mit Mikrostrukturen wird hier und im Folgenden auch als Reaktor mit Mikrostrukturen, mikrostrukturierter Reaktor oder Mikroreaktor bezeichnet. Mikrostrukturierte Reaktoren sind geeignet, die thermische Homogenität senkrecht zur Strömungsrichtung zu gewährleisten. Dabei weist prinzipiell jedes differentielle Volumenelement die im Wesentlichen gleiche Temperatur über den jeweiligen Strömungsquerschnitt auf.

Herkömmliche Reaktoren und Mikroreaktoren unterscheiden sich durch ihre charakteristische Dimension und insbesondere durch die charakteristische Dimension ihrer Reaktionszone. Unter der charakteristischen Dimension einer Einrichtung, z.B. eines Reaktors, versteht man im Rahmen der vorliegenden Erfindung die kleinste, zur Strömungsrichtung senkrechte Ausdehnung. Die charakteristische Dimension der Reaktionszone eines Mikroreaktors ist deutlich kleiner ist als die eines herkömmlichen Reaktors und liegt üblicherweise im Bereich von hundert Nanometern bis einigen zig Millimetern. Häufig liegt sie im Bereich von 1 $\mu$m bis 30 mm. Im Vergleich zu herkömmlichen Reaktoren zeigen daher Mikroreaktoren in Bezug auf die ablaufenden Wärme- und Stofftransportvorgänge ein signifikant verschiedenes Verhalten. Durch das größere Verhältnis von Oberfläche zu Reaktorvolumen wird beispielsweise eine sehr gute Wärmezufuhr bzw. -abfuhr ermöglicht, weshalb sich auch stark endo- bzw. exotherme Reaktionen nahezu isotherm durchführen lassen.

Herkömmliche Reaktoren weisen eine charakteristische Dimension von > 30 mm auf, Mikroreaktoren hingegen $\leq$ 30 mm. Die charakteristische Dimension der Reaktionszone eines Reaktors mit Mikrostrukturen beträgt in der Regel höchstens 30 mm, z.B. 0,1 bis 30 mm oder vorzugsweise 0,2 bis 30 mm oder besonders bevorzugt 0,4 bis 30 mm; vorzugsweise höchstens 20 mm, z.B. 0,1 bis 20 mm oder vorzugsweise 0,2 bis 20 mm oder besonders bevorzugt 0,4 bis 20 mm; besonders bevorzugt höchstens 15 mm, z.B. 0,1 bis 15 mm oder vorzugsweise 0,2 bis 15 mm oder besonders bevorzugt 0,4 bis 15 mm; stärker bevorzugt höchstens 10 mm, z.B. 0,1 bis 10 mm oder vorzugsweise 0,2 bis 10 mm oder besonders bevorzugt 0,4 bis 10 mm; noch stärker bevorzugt höchstens 8 mm, z.B. 0,1 bis 8 mm oder vorzugsweise 0,2 bis 8 mm oder besonders bevorzugt 0,4 bis 8 mm; insbesondere höchstens 6 mm, z.B. 0,1 bis 6 mm oder vorzugsweise 0,2 bis 6 mm oder besonders bevorzugt 0,4 bis 6 mm; und speziell höchstens 4 mm, z.B. 0,1 bis 4 mm oder vorzugsweise 0,2 bis 4 mm oder besonders bevorzugt 0,4 bis 4 mm und noch spezieller 0,4 bis 3 mm.

Erfindungsgemäß einzusetzende Mikroreaktoren sind vorzugsweise ausgewählt unter temperierbaren Rohrreaktoren, Rohrbündelwärmetauschern, Plattenwärmetauschern und temperierbaren Rohrreaktoren mit Einbauten. Erfindungsgemäß einzusetzende Rohrreaktoren, Rohrbündelwärmetauscher und Plattenwärmetauscher weisen als charakteristische Dimensionen Rohr- bzw. Kapillardurchmesser im Bereich von vorzugsweise 0,1 mm bis 25 mm, besonders bevorzugt im Bereich von 0,5 mm bis 6 mm, stärker bevorzugt im Bereich von 0,7 bis 4 mm und insbesondere im Bereich von 0,8 mm bis 3 mm, und Schichthöhen bzw. Kanalbreiten im Bereich von vorzugsweise 0,2 mm bis 10 mm, besonders bevorzugt im Bereich von 0,2 mm bis 6 mm und insbesondere im Bereich von 0,2 mm bis 4 mm auf. Erfindungsgemäß einzusetzende Rohrreaktoren mit Einbauten weisen Rohrdurchmesser im Bereich von 5 mm bis 500 mm, bevorzugt im Bereich von 8 mm bis 200 mm und besonders bevorzugt im Bereich von 10 mm bis 100 mm auf. Alternativ können auch Plattenapparaten vergleichbare Flachkanäle mit eingelegten Mischstrukturen erfindungsgemäß zum Einsatz kommen. Sie weisen Höhen im Bereich von 1 mm bis 20 mm und Breiten im Bereich von 10 mm bis 1000 mm und insbesondere im Bereich von 10 mm bis 500 mm auf. Optional können die Rohrreaktoren Mischelemente enthalten, welche von Temperierkanälen durchzogen sind.

Die optimale charakteristische Dimension ergibt sich hierbei aus den Anforderungen an die zulässige Anisothermie der Reaktionsführung, den maximal zulässigen Druckverlust und die Verstopfungsanfälligkeit des Reaktors.

Die Reaktoren sind hierbei so konstruiert, dass die Mikroreaktoren in sehr gutem Kontakt mit einem Temperiermedium sind, so dass ein sehr guter Wärmeübergang zwischen der Reaktionsmischung in der Reaktionszone mit Mikrostrukturen sowie dem Temperiermedium möglich ist, so dass eine weitgehend isotherme Reaktionsführung möglich ist.

Besonders bevorzugte Mikroreaktoren sind:

- Rohrreaktoren aus Kapillaren, Kapillarbündeln mit Rohrquerschnitten von 0,1 bis 25 mm, bevorzugt von 0,5 bis 6 mm, besonders bevorzugt von 0,7 bis 4 mm, mit oder ohne zusätzliche mischende Einbauten, wobei die Rohre bzw. Kapillaren von einem Temperiermedium umspült werden können;

- Rohrreaktoren, bei dem der Wärmeträger in den Kapillaren/Rohren geführt wird, und das zu temperierende Produkt um die Rohre geführt und durch Einbauten (Mischelemente) homogenisiert wird;

- Plattenreaktoren, die wie Plattenwärmetauscher mit isolierten parallelen Kanälen, Netzwerken von Kanälen oder Flächen, welche mit oder ohne strömungsbrechenden Einbauten (Pfosten) ausgerüstet sind, aufgebaut sind, wobei die Platten Produkt und Wärmeträger parallel oder in einer Schichtstruktur, welche abwechselnd Wärmeträger- und Produkt-Lagen aufweist, führen, so dass während der Reaktion die chemische und thermische Homogenität sichergestellt werden kann; sowie

- Reaktoren mit "flachen" Kanalstrukturen, welche nur in der Höhe eine "Mikrodimension" aufweisen und nahezu beliebig breit sein können, deren typische kammförmige Einbauten die Ausbildung eines Strömungsprofils verhindern und zu einer für die definierte Reaktionsführung und Verweilzeit wichtigen, engen Verweilzeitverteilung führen.

In einer bevorzugten Ausführung der Erfindung wird mindestens ein Reaktor eingesetzt, der weitgehend die Verweilzeitcharakteristik einer Pfropfenströmung aufweist. Liegt in einem Rohrreaktor eine Pfropfenströmung ("plug-flow") vor, so kann der Zustand des Reaktionsgemisches (z.B. Temperatur, Zusammensetzung etc.) in Strömungsrichtung variieren, für jeden einzelnen Querschnitt senkrecht zur Fließrichtung hingegen ist der Zustand des Reaktionsgemisches gleich. Damit haben alle in das Rohr eintretenden Volumenelemente die gleiche Verweilzeit im Reaktor. Bildlich gesehen durchströmt die Flüssigkeit das Rohr, als handele es sich um eine Aneinanderreihung leicht durch das Rohr gleitender Pfropfen. Zusätzlich kann die Quervermischung durch den intensivierten Stofftransport senkrecht zur Strömungsrichtung den Konzentrationsgradienten senkrecht zur Strömungsrichtung ausgleichen.

Trotz der meist laminaren Durchströmung von Apparaturen mit Mikrostrukturen lässt sich also Rückvermischung vermeiden und eine enge Verweilzeitverteilung ähnlich wie bei einem idealen Strömungsrohr erreichen.

Die Bodensteinzahl ist eine dimensionslose Kennzahl und beschreibt das Verhältnis des Konvektionsstromes zum Dispersionsstrom (z.B. M. Baerns, H. Hofmann, A. Renken, Chemische Reaktionstechnik, Lehrbuch der Technischen Chemie, Band 1, 2. Auflage, S. 332 ff). Sie charakterisiert also die Rückvermischung innerhalb eines Systems.

$$Bo = \frac{uL}{D_{ax}}$$

wobei u für die Strömungsgeschwindigkeit [ms$^{-1}$], L für die Länge des Reaktors [m] und $D_{ax}$ für denaxialen Dispersionskoeffizienten [m$^2$h$^{-1}$] stehen.

Eine Bodensteinzahl von Null entspricht der vollständigen Rückvermischung in einem idealen kontinuierlichen Rührkessel. Eine unendlich große Bodensteinzahl hingegen bedeutet absolut keine Rückvermischung, wie bei der kontinuierlichen Durchströmung eines idealen Strömungsrohres.

In Kapillarreaktoren kann das gewünschte Rückvermischungsverhalten durch Einstellung des Verhältnisses von Länge zu Durchmesser in Abhängigkeit von den Stoffparametern und dem Strömungszustand eingestellt werden. Die zu Grunde liegenden Berechnungsvorschriften sind dem Fachmann bekannt (z.B. M. Baerns, H. Hofmann, A. Renken: Chemische Reaktionstechnik, Lehrbuch der Technischen Chemie, Band 1, 2. Auflage, S. 339 ff). Soll ein möglichst rückvermischungsarmes Verhalten realisiert werden, so wird die oben definierte Bodensteinzahl bevorzugt größer 10, besonders bevorzugt größer 20 und insbesondere größer 50 gewählt. Für eine Bodensteinzahl von größer 100 besitzt der Kapillarreaktor dann weitgehend einen Propfenströmungscharakter.

Als Materialien für die erfindungsgemäß einzusetzenden Mischer und Reaktoren haben sich im Bereich niedriger Temperaturen austenitische Edelstähle, wie 1.4541 bzw. 1.4571, allgemein als V4A bzw. als V2A bekannt, sowie Edelstähle der US-Typen SS316 und SS317Ti, als vorteilhaft erwiesen. Bei höheren Temperaturen und unter korrosiven Bedingungen sind Polyetherketone ebenfalls geeignet. Es können aber auch korrosionsresistentere Hastelloy®-Typen, Glas oder Keramik als Materialien und/oder entsprechende Beschichtungen, wie beispielsweise $TiN_3$, Ni-PTFE, Ni-PFA oder dergleichen, für die erfindungsgemäß einzusetzenden Mischer und Reaktoren verwendet werden.

Bei Reaktoren mit mikrostrukturierten Reaktionszonen ist es empfehlenswert, Filter vor den mikrostrukturierten Teilen der Reaktionszonen vorzusehen, um Verstopfungen durch partikuläre Verunreinigungen zu vermeiden, wenngleich dies nicht immer zwingend erforderlich ist.

Zum Aufwärmen des Reaktionsgemisches auf die zur Polymerisation notwendige Temperatur sowie zum Halten der gewünschten Polymerisationstemperatur wird jede Reaktionszone von einem Temperiermedium einer Temperatur $T_{Soll}$ temperiert. Hierbei wird das Reaktionsgemisch nach dem Einströmen aus dem Mischer in die erste Reaktionszone in einem -in Strömungsrichtung gesehen- ersten Bereich der Reaktionszone erwärmt, und polymerisiert nach dem Erreichen einer für die Polymerisation ausreichenden Temperatur in einem -in Strömungsrichtung gesehen- zweiten Bereich der ersten sowie gegebenenfalls weiterer, in Strömungsrichtung dahinter angeordneter Reaktionszonen.

Sofern die Polymerisationsapparatur mehr als eine Reaktionszone aufweist, können diese Reaktionszonen gleiche oder unterschiedliche Temperaturen $T_{Soll}$ aufweisen. Zonen unterschiedlicher Solltemperatur müssen naturgemäß von unterschiedlichen Temperiermedien temperiert werden, Zonen gleicher Temperatur können je nach Konstruktion des Reaktors von der gleichen oder von unterschiedlichen Temperiermedien temperiert werden.

Das Temperiermedium sollte eine ausreichend hohe Wärmekapazität aufweisen, intensiv umgewälzt werden und mit einer Thermostatisiereinheit ausreichender Leistung versehen sein, und der der Wärmeübergang zwischen der Reaktionszone und dem Temperiermedium sollte möglichst gut sein, um eine möglichst homogene Temperaturverteilung in der Reaktionszone zu gewährleisten.

Hierzu sollte -je nach Exothermie und charakteristischer Reaktionszeit der Polymerisationsreaktion- das Verhältnis von Wärmeaustauschfläche zu Reaktionsvolumen in der Regel größer als 250 m$^2$/m$^3$, bevorzugt größer als 500 m$^2$/m$^3$, besonders bevorzugt größer als 1000 m$^2$/m$^3$ und insbesondere größer als 2000 m$^2$/m$^3$ gewählt werden. Weiterhin sollte der Wärmeübergangskoeffizient auf der Seite des Reaktionsmediums in der Regel mehr als 50 W/m$^2$K, bevorzugt mehr als 100 W/m$^2$K, besonders bevorzugt mehr als 200 W/m$^2$K und insbesondere mehr als 400 W/m$^2$K betragen.

Als Mindestanforderung an den Reaktor sowie das Temperiermedium soll erfindungsgemäß gewährleistet sein, dass die Temperaturdifferenzen ΔT zwischen $T_{Soll}$ des Temperiermediums und der tatsächlichen Reaktionstemperatur $T_R$ nach dem Durchlaufen der Aufheizzone an jedem Punkt innerhalb der Reaktionszone $|T_R - T_{Soll}| ≤ 50$ K betragen. Bevorzugt ist die Temperaturdifferenz ≤ 20 K, besonders bevorzugt ≤ 10 K und ganz besonders bevorzugt ≤ 5 K. So kann die Reaktion unter weitgehend definierten und kontrollierten Bedingungen ablaufen.

Die maximalen Temperaturunterschiede in einem Strömungsquerschnitt im Reaktionsmedium senkrecht zur Hauptströmungsrichtung hängen dabei von den gewählten Polymerisationsparametern ab. Bevorzugt beträgt die maximale Temperaturdifferenz in einem Strömungsquerschnitt weniger als 15 K, besonders bevorzugt weniger als 10 K und ganz besonders bevorzugt weniger als 5 K.

Zur Festlegung des Produktes aus volumenspezifischer Wärmeübergangsfläche und Wärmeübergangskoeffizient kann folgende Beziehung angewendet werden:

$$\alpha \cdot \left( \frac{A}{V} \right) = \frac{\Delta H \cdot \rho}{\Delta T \cdot \Delta t_R}$$

worin

$\alpha$    Wärmeübergangskoeffizient [W/m$^2$K],

A/V     volumenspezifische Wärmeübergangsfläche [$m^2/m^3$],

$\Delta H$     Reaktionsenthalpie [J/kg],

$\Delta T$     zulässige maximale Temperaturabweichung im Reaktionsmedium [K],

$\rho$     Partialdichte der Monomers im Reaktionsgemisch [$kg/m^3$] und

$\Delta t_R$     charakteristische Reaktionszeit [s]

bedeuten.

Bevorzugte Polymerisationsapparatur:

Über Mischer und Reaktoren hinaus umfasst die zur radikalischen Polymerisation eingesetzte Apparatur weitere übliche Komponenten, wie Eduktbehälter, Produktbehälter, Dosiervorrichtungen sowie Verbindungen zwischen den einzelnen Apparaturteilen.

In einer bevorzugten Ausführungsform der Erfindung umfasst die Vorrichtung

- wenigstens zwei Vorlagebehälter für flüssige Ausgangsstoffe,

- je eine Zuführung für die flüssigen Ströme aus den wenigstens zwei Vorlagebehältern,

- einen oder mehrere hintereinander geschalte Mischer, dem/denen die flüssigen Ströme zugeführt und in denen sie unter Erhalt eines Reaktionsgemisches vermischt werden, wobei bevorzugt zumindest der in Stromrichtung letzte Mischer vor Eintritt in die Reaktionszone(n) mit Mikrostrukturen ausgestattet ist,

- wenigstens eine Reaktionszone, wobei es sich bevorzugt um eine Reaktionszone mit Mikrostrukturen handelt, und

- einen Austragsbehälter, der gegebenenfalls mit einer oder mehreren Zugabe- und/oder Mischvorrichtungen versehen ist.

In einer zweiten Ausführungsform der Erfindung umfasst die Vorrichtung

- wenigstens drei Vorlagebehälter für flüssige Ausgangsstoffe,

- je eine Zuführung für die flüssigen Ströme aus den wenigstens drei Vorlagebehältern,

- einen oder mehrere hintereinander geschalte Mischer, dem/denen die flüssigen Ströme zugeführt und in denen sie unter Erhalt eines Reaktionsgemisches vermischt werden, wobei zumindest der in Stromrichtung letzte Mischer vor Eintritt in die Reaktionszone(n) mit Mikrostrukturen ausgestattet ist,

- wenigstens eine Reaktionszone mit Mikrostrukturen, und

- einen Austragsbehälter, der gegebenenfalls mit einer oder mehreren Zugabe- und/oder Mischvorrichtungen versehen ist.

In einer weiteren geeigneten Ausführung umfasst die Vorrichtung zwei Reaktionszonen, wobei mindestens eine davon, bevorzugt beide Mikrostrukturen aufweisen.

In einer ebenfalls geeigneten Ausführung weist die Vorrichtung wenigstens eine weitere Zuführung für einen flüssigen Monomerstrom auf, die im Anschluss an eine Reaktionszone angeordnet ist und auf die in Stromrichtung wenigstens noch eine Reaktionszone folgt.

In einer geeigneten Ausgestaltung weist diese Vorrichtung wenigstens eine weitere Zuführung für einen flüssigen Additivstrom auf, die im Anschluss an die in Stromrichtung letzte Reaktionszone angeordnet ist.

In einer weiteren, geeigneten Ausgestaltung dieser Vorrichtung werden der weitere zugeführte flüssige Strom und der Austrag aus der Reaktionszone, an die sich die Zuführung anschließt, in einen Mischer mit Mikrostrukturen geführt und darin vermischt.

Polymerisationsverfahren:

Erfindungsgemäß umfasst das kontinuierliche Verfahren zur Polymerisation mindestens zwei Schritte, nämlich

(Ia) kontinuierliches Mischen der Edukte sowie Wasser in einer Mischeinheit umfassend mindestens einem Mischer, sowie

(Ib) kontinuierliche radikalische Polymerisation des erhaltenen Reaktionsgemisches in mindestens einer Reaktionszone.

Verfahrensschritt (Ia)

In Schritt (Ia) werden mindestens Acrylsäure, Wasser, ein Initiator sowie mindestens ein Regler kontinuierlich miteinander vermischt. Selbstverständlich können auch noch weitere Komponenten, wie beispielsweise weitere Comonomere oder weitere Lösemittel ebenfalls in Verfahrensschritt (Ia) mit den anderen Komponenten vermischt werden. In der Regel werden die Edukte als wässrige Lösungen eingesetzt, es ist aber denkbar, flüssige Ausgangsprodukte, wie beispielsweise Acrylsäure oder einen flüssigen Regler in Substanz einzusetzen. Wasser wird üblicherweise nicht separat zudosiert, sondern Wasser wird in Form der wässrigen Lösungen der Edukte eindosiert. Denkbar ist es aber selbstverständlich auch, Wasser in einem zusätzlichen, separaten Strom einzudosieren.

Die Edukte bzw. vorbereitete Mischungen oder Lösungen können in geeigneten Vorlagebehältern vorgehalten werden, und zum Mischen werden mindestens zwei flüssige Ströme der Edukte einschließlich Wasser in den Mischer eindosiert. Die Verteilung der Edukte auf die mindestens zwei flüssigen Ströme kann vom Fachmann vorgenommen werden, mit der Maßgabe, dass sich die Komponenten nicht negativ beeinflussen sollten. Insbesondere sollte der den Initiator enthaltende Strom nicht auch den Regler enthalten.

Bevorzugt werden mindestens drei flüssige Ströme miteinander vermischt, und zwar ein Acrylsäure-haltiger Strom, ein Initiator-haltiger Strom und ein Regler-haltiger Strom.

Bevorzugt werden hierbei zumindest die Acrylsäure und der Initiator jeweils separat mit Wasser gemischt. Der Regler kann ebenfalls in Wasser gelöst werden, kann aber gegebenenfalls auch ohne zusätzliches Lösemittel eingesetzt werden. Die drei flüssigen Komponenten werden jeweils als kontinuierlicher Strom in die Mischvorrichtung eindosiert.

Das Mischen kann einstufig in nur einem Mischer erfolgen, es kann aber auch eine Mischvorrichtung eingesetzt werden, die über mehr als einen Mischer verfügt. Hierbei können beispielsweise zwei Ströme mittels eines ersten Mischers gemischt werden, und das erhaltene Gemisch in einem zweiten Mischer mit einem dritten flüssigen Strom vermischt werden. In einer bevorzugten Ausführungsform der Erfindung kann man in einem ersten Mischer einen Acrylsäure-haltigen Strom, bevorzugt ein Acrylsäure-Wasser-Gemisch, und einen Initiator-haltigen Strom, bevorzugt eine wässrige Lösung des Initiators, miteinander vermischen und das erhaltene wässrige Gemisch in einem zweiten Mischer mit einem Regler-haltigen Strom, bevorzugt einer wässrigen Lösung des Reglers vermischen.

Bei den eingesetzten Mischern kann es sich sowohl um konventionelle Mischer wie um Mischer mit Mikrostrukturen handeln. Beide Typen von Mischern sowie spezielle Ausführungsformen wurden bereits beschrieben. Erfindungsgemäß handelt es sich bei mindestens einem der eingesetzten Mischer um einen Mischer mit Mikrostrukturen, besonders bevorzugt bei allen eingesetzten Mischern. In einer anderen, bevorzugten Ausführungsform erfolgt das Vermischen der flüssigen Ströme mehrstufig, d.h. unter Verwendung einer Mischvorrichtung mit mehreren Mischern, wobei zumindest der in Strömungsrichtung letzte Mischer vor Eintritt in die Reaktionszone(n) ein Mischer mit Mikrostrukturen ist.

Unabhängig von der Art des Mischers muss aber erfindungsgemäß gewährleistet sein, dass die Mischtemperatur $T_M$ kleiner ist als die Solltemperatur $T_{Soll}$ im nachfolgenden Verfahrensschritt (Ib). Sofern $T_M$ im Mischraum nicht einheitlich ist, sondern eine gewisse räumliche Verteilung aufweist, bezieht sich $T_M$ auf die höchste, im Mischraum vorherrschende Temperatur.

Weiterhin sollte die Mischtemperatur so bemessen sein, dass in der Mischzone kein wesentlicher Umsatz stattfindet, sondern die Bildung von Polyacrylsäure erst bei der gewünschten Temperatur in der mindestens einen Reaktionszone stattfindet. Der Umsatz an Acrylsäure innerhalb der Mischzone sollte im Regelfalle < 2 %, bevorzugt < 1 % betragen.

Bevorzugt beträgt die Differenz $T_{Soll}$- $T_M \geq 10$ K, besonders bevorzugt $\geq 20$ K und ganz besonders bevorzugt $\geq 30$ K. Weiterhin sollte die Mischtemperatur bevorzugt 10 bis 30°C, besonders bevorzugt etwa Raumtemperatur (18 bis 22°C) betragen.

Die Temperatur der Mischung innerhalb der Mischeinheit bzw. der einzelnen Mischer kann sofern erforderlich mittels Temperiermedien, die mit den Mischern in Kontakt stehen gewährleistet werden. Der Wärmeaustausch ist naturgemäß bei Mischern mit Mikrostrukturen besonders gut und so kann eventuell gebildete Mischungswärme schnell abgeführt werden.

Die Konzentration der Monomere in der Reaktionsmischung sollte bevorzugt so bemessen werden, dass eine Polyacrylsäurelösung in der gewünschten Konzentration erhalten werden wird und zur Verwendung nicht aufkonzentriert werden muss. Im Regelfall beträgt die Konzentration der Acrylsäure sowie optional weiterer Monomere in der Reaktionsmischung 10 bis 80 Gew. % bezüglich aller Komponenten der Reaktionsmischung, bevorzugt 20 bis 70 Gew. % und besonders bevorzugt 30 bis 60 Gew. %. Bevorzugte Mengen an Regler und Initiator wurden bereits eingangs erwähnt.

Verfahrensschritt (Ib)

Nach dem Mischen wird ein Strom der wässrigen Reaktionsmischung kontinuierlich durch mindestens eine Reaktionszone geleitet, in der die Acrylsäure sowie optional weitere, ethylenisch ungesättigte Comonomere radikalisch polymerisieren.

Die Reaktionszone wird hierbei von einem Temperiermedium einer Temperatur $T_{Soll}$ temperiert. Einzelheiten zum Temperiermedium wurden bereits geschildert. Nach dem Einströmen des Reaktionsgemisch aus dem Mischer in die erste Reaktionszone wird das Gemisch in einem -in Strömungsrichtung gesehen- ersten Bereich der Reaktionszone erwärmt und polymerisiert nach dem Erreichen einer für die Polymerisation ausreichenden Temperatur in einem -in Strömungsrichtung gesehen- zweiten Bereich der ersten Reaktionszone sowie gegebenenfalls dahinter angeordneten weiteren Reaktionszonen.

$T_{Soll}$ liegt hierbei im Bereich von 10°C bis 200°C, bevorzugt 50°C bis 200°C, besonders bevorzugt 50°C bis 150°C, ganz besonders bevorzugt 60°C bis 130°C und beispielsweise 80°C bis 120°C. $T_{Soll}$ wird vom Fachmann je nach den gewünschten Polymerisationsbedingungen gewählt und richtet sich beispielsweise nach der Art des gewählten Initiators, der Strömungsgeschwindigkeit oder der Art des Reaktors.

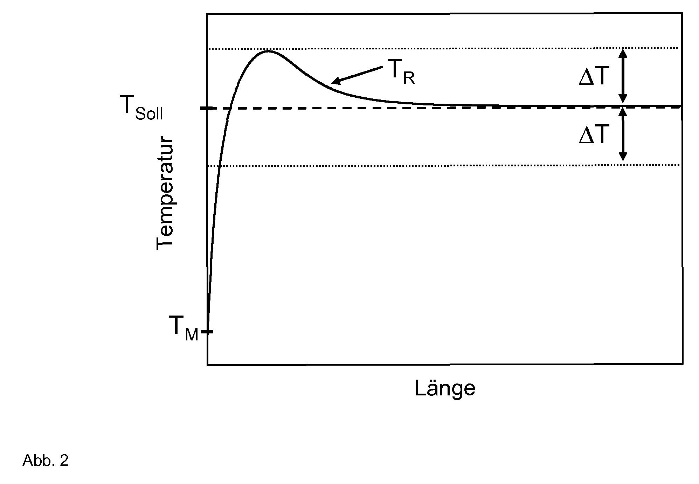

Ein typischer Temperaturverlauf während der Polymerisation ist schematisch in Abbildung 2 gezeigt. Die x-Achse ("Länge") bezeichnet die Ausdehnung der Reaktionszone in Strömungsrichtung. Das Reaktionsgemisch strömt mit der Temperatur $T_M$ in die Reaktionszone ein, die vom einem Temperiermedium mit der Temperatur $T_{Soll}$ temperiert wird. $T_{Soll}$ wird auf die gewünschte Polymerisationstemperatur eingestellt. Das Reaktionsgemisch wird beim Durchströmen eines ersten Bereichs des Reaktors durch das Temperiermedium erwärmt. Während des Aufwärmens findet noch keine oder zumindest im Wesentlichen keine Polymerisation statt. Nach dem Erreichen einer für die Polymerisation ausreichenden Temperatur, d.h. ab einer Temperatur bei dem der Initiator mit nennenswerter Geschwindigkeit zerfällt beginnt die Polymerisation. Durch die exotherme Polymerisation steigt die tatsächliche Temperatur $T_R$ des Reaktionsgemisches über $T_{Soll}$ hinaus und wird durch das nun kältere Temperiermedium gekühlt. Hierdurch nähert sich die Temperatur $T_R$ -in Strömungsrichtung gesehen- allmählich wieder $T_{Soll}$ an. Der Übergang zwischen der Aufwärmzone und der eigentlichen Polymerisationszone ist naturgemäß fließend. In einer näherungsweisen Betrachtung kann als Beginn der eigentlichen Reaktionszone derjenige Ort angesehen werden, an dem $T_R$ beim Aufheizen den Wert von $T_{Soll}$- $\Delta T$ (wie nachstehend definiert) übersteigt.

Erfindungsgemäß beträgt nach dem Durchströmen der Aufheizzone die Temperaturdifferenz $\Delta T$ zwischen $T_{Soll}$ und der tatsächlichen Reaktionstemperatur $T_R$ an jedem beliebigen Punkt in der Reaktionszone nach der Aufheizzone $|T_R- T_{Soll}| \leq 50$ K, bevorzugt $\leq 20$ K, besonders bevorzugt $\leq 10$ K und ganz besonders bevorzugt $\leq 5$ K. Die Temperatur soll sich also nach dem Aufheizen des Reaktionsgemisches, d.h. während der eigentlichen Polymerisation, immer in einem Bereich $T_{Soll}$ +/- $\Delta T$ bewegen. Dabei kann das Temperiermedium im Gleichstrom oder Gegenstrom zu dem Reaktionsmedium geführt werden.

Die Verweilzeit $t_R$ innerhalb einer Reaktionszone beträgt in der Regel 5 s bis 30 min, bevorzugt 10 s bis 15 min und insbesondere ½ min bis 10 min.

Sofern die Polymerisationsapparatur mehr als eine Reaktionszone aufweist, können diese Reaktionszonen auf gleiche oder unterschiedliche Solltemperaturen $T_{Soll}$ temperiert werden. Zonen unterschiedlicher $T_{Soll}$ müssen naturgemäß von unterschiedlichen Temperiermedien temperiert werden, Zonen gleicher Temperatur können je nach Konstruktion des Reaktors von der gleichen oder von unterschiedlichen Temperiermedien temperiert werden.

Der Druck im Zuge der Polymerisation kann in weiten Bereichen variiert werden. Es wird zumindest ein so hoher Druck angewandt, dass das Reaktionsgemisch durch die Reaktionszone(n) hindurchgepresst werden kann, wobei der Strömungswiderstand der Reaktionszone(n) und damit der notwendige Druck mit abnehmendem Durchmesser der Reaktionszone(n) naturgemäß zunimmt. Er kann also insbesondere bei Reaktoren mit Mikrostrukturen erheblich sein. Ebenso naturgemäß können hierbei auch erhebliche Druckgradienten auftreten. Der geringste Druck in der Reaktionszone wird so gewählt, dass er deutlich oberhalb des Dampfdruckes von Monomer(en) und Lösungsmittel(n) liegt, um ein unkontrolliertes Entgasen mit Ausbildung eines undefinierten Verweilzeitverhaltens zu verhindern.

Für den Fall, dass mehr als eine Reaktionszone verwendet wird, kann in einer Ausführungsform der Erfindung zwischen wenigstens zwei der Reaktionszonen wenigstens ein zusätzlicher flüssiger Strom zugemischt werden. Dabei kann es sich beispielsweise um einen monomerhaltigen Strom, initiatorhaltigen Strom, lösungsmittelhaltigen Strom, reglerhaltigen Strom, eine Mischung daraus und/oder um einen beliebigen anderen weiteren Stoffstrom handeln. Bei einem weiteren Stoffstrom kann es sich beispielsweise um eine wässrige Base handeln, mit der die Monomere und/oder gebildete Polymere ganz oder teilweise neutralisiert werden können.

In einer geeigneten Ausführungsform wird/werden dabei der/die zusätzliche(n) Strom/Ströme über einen Mischer mit Mikrostrukturen zugemischt. In einer ebenfalls geeigneten Ausführungsform wird zum Vermischen dieses zusätzlichen Stroms bzw. dieser zusätzlichen Ströme und für die weitere Reaktion wenigstens ein Reaktor, bevorzugt ein Reaktor mit Mischfunktion, optional ein mikrostrukturierter Reaktor mit Mischfunktion eingesetzt.

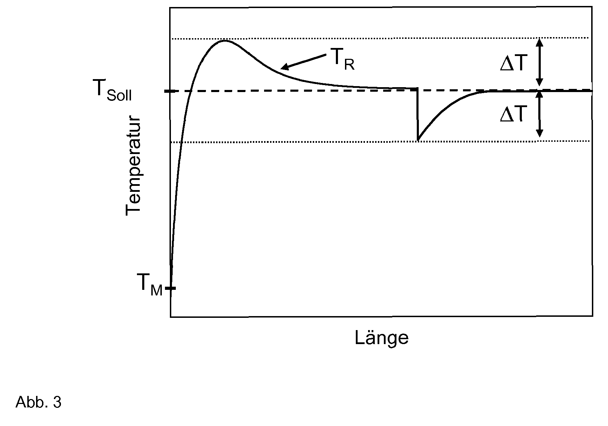

Ein Beispiel eines typischen Temperaturverlaufes bei einer Nachdosierung ist in Abbildung 3 gezeigt. Nach dem Einmischen eines zusätzlichen Stromes mit niedrigerer Temperatur als $T_{Soll}$ sinkt die Temperatur zunächst unter $T_{Soll}$ und nähert sich dann $T_{Soll}$ wieder an. Möglich sind natürlich auch andere Temperaturverläufe, beispielsweise dass die die Temperatur zunächst abnimmt, dann aber aufgrund exothermer Reaktion über $T_{Soll}$ überschwingt und sich erst danach wieder $T_{Soll}$ annähert. Je nach der Art des zusätzlichen Stoffstromes kann ein zudosierter Strom natürlich etwa auf $T_{Soll}$ vortemperiert werden, so dass an der Dosierstelle in der Reaktionszone keine wesentlichen Abweichungen von $T_{Soll}$ mehr auftreten.

Zur Erzielung möglichst reiner Polyacrylsäure Homo- oder Copolymere mit geringem Restmonomergehalt kann sich an die Polymerisation (Hauptpolymerisation) ein Nachpolymerisationsschritt anschließen. Die Nachpolymerisation kann in Gegenwart desselben oder eines anderen Initiatorsystems wie die Hauptpolymerisation erfolgen. Vorzugsweise erfolgt die Nachpolymerisation mindestens bei der gleichen, vorzugsweise bei einer höheren Temperatur als die Hauptpolymerisation.

Verfahrensschritt (II): Abtrennung niedermolekularer Komponenten:

In einem weiteren Verfahrensschritt (II) nach der Polymerisation werden niedermolekulare Komponenten aus der erhaltenen wässrigen Polymerlösung zumindest teilweise abgetrennt, bevorzugt mittels physikalischer bzw. physikalisch-chemischer Methoden. Dieser Verfahrensschritt kann sich unmittelbar an die Polymerisation anschließen, oder die wässrige Polyacrylsäurelösung kann erst zwischengelagert und der zusätzliche Verfahrensschritt in einem gewissen zeitlichen Abstand dazu ausgeführt werden. Die Abtrennung niedermolekularer Komponenten kann kontinuierlich oder diskontinuierlich vorgenommen werden.

Bei niedermolekularen Komponenten handelt es sich um Moleküle mit einer molaren Masse von $\leq 1000$ g/mol, bevorzugt $\leq 500$ g/mol uns insbesondere $\leq 300$ g/mol. Hierbei kann es sich um Reste des Reglers, insbesondere Reste schwefelhaltiger Regler und insbesondere bevorzugt Mercaptane handeln, welche als Regler eingesetzt werden. Weiterhin kann es sich um Zersetzungsprodukte des Reglers handeln, wie beispielsweise Schwefelwasserstoff oder Folgeprodukte davon. Weitere Beispiele von niedermolekularen Komponenten umfassen nicht einpolymerisierte Monomere, Acrylsäure-Oligomere oder Polymerbruchstücke. Derartige niedermolekulare Komponenten können im Endprodukt äußerst unerwünscht sein, beispielsweise, weil sie einen unangenehmen Geruch aufweisen oder aus einem anderen Grunde bei der Verwendung des Produktes stören.

Mit dem Begriff "niedermolekulare Komponenten" sind aber nicht Wasser oder optional in Mischung mit Wasser eingesetzte organische Lösemittel gemeint, wenngleich damit nicht ausgeschlossen sein soll, dass im Zuge der Abtrennung auch Teile von Wasser und/oder Lösemitteln mit abgetrennt werden könnten.

Der Verfahrensschritt (II) kann insbesondere zur Desodorierung der Polyacrylsäure eingesetzt werden. Unter "Desodorierung" versteht der Fachmann die Entfernung und/oder Deaktivierung von flüchtigen Komponenten eines Substanzgemisches, welche einen störenden Geruch hervorrufen und/oder die Anwendung des Substanzgemisches stören.

Das Abtrennen niedermolekularer Komponenten kann prinzipiell nach beliebigen physikalischen bzw. physikalisch-chemischen Trennmethoden vorgenommen werden. Beispiele derartiger Trennmethoden umfassen die Abtrennung durch Extraktion unter Verwendung von Wasserdampf, Inertgasen oder Lösemitteln (sowohl flüssig-flüssig als auch flüssig-Gas), Absorptionsmethoden, chromatographische Methoden oder osmotische Methoden wie beispielsweise Ultrafiltration. Selbstverständlich kann man auch mehrere Abtrennmethoden miteinander kombinieren.

In einer bevorzugten Ausführungsform der Erfindung wird das Abtrennen niedermolekularer Komponenten mittels Strippen mittels Wasserdampf vorgenommen. Dem Fachmann sind geeignete Methoden zum Dampf-Strippen bekannt. Beispielhaft sei hinsichtlich möglicher Ausführungsformen auf DE 1 248 943, DE 196 21 027 A1, DE 197 16 373 A1 oder EP 967 232 A1 verwiesen.

Beim Strippen mit Wasserdampf kann man Wasserdampf beispielsweise durch die wässrige Polymerlösung hindurchleiten. Die Polymerlösung kann hierzu auf Siedetemperatur erhitzt werden, oder heizt sich durch den heißen Wasserdampf auf Siedetemperatur auf. Die Menge des hindurchgeleiteten Wasserdampfes beträgt in der Regel 50 bis 1000 Gew. % bezogen auf die Menge der wässrigen Polymerlösung, bevorzugt 100 bis 500 Gew. %. Strippen mit Wasserdampf kann beispielsweise auch in Kolonnen vorgenommen werden. Strippen mit Wasserdampf erfolgt in der Regel bei einem Druck von 0,1 bis 50 bar, bevorzugt 0,2 bis 30 bar und besonders bevorzugt 0,5 bis 10 bar.

In einer weiteren bevorzugten Ausführungsform der Erfindung wird das Abtrennen niedermolekularer Komponenten mittels Ultrafiltration vorgenommen. Dem Fachmann sind geeignete Methoden zur Ultrafiltration bekannt. Beispielhaft sei hinsichtlich möglicher Ausführungsformen auf US 5,055,197 oder EP 1 024 150 A1 verwiesen. Zur Ultrafiltration werden Membranen eingesetzt, welche Stoffe mit einem $M_n$ von $\leq 1000$ g/mol abtrennen können. Dem Fachmann sind derartige Membranen bekannt. Die Ultrafiltration kann beispielsweise bei einem Druck von 0,1 bis 50 bar vorgenommen werden.

Erhaltene Polyacrylsäure-Homo- oder Copolymere:

Die erhaltenen Homopolymere oder Copolymere der Acrylsäure weisen vorzugsweise ein zahlenmittleres Molekulargewicht $M_n$ (bestimmbar mittels Gelpermeationschromatographie, GPC; englisch: Size Exclusion Chromatographie, SEC im wässrigen Medium) im Bereich von 1000 g/mol bis 20000 g/mol, bevorzugt im Bereich von 1000 g/mol bis 10000 g/mol und besonders bevorzugt im Bereich von 1000 g/mol bis 8000 g/mol auf. Weiterhin ist das Verhältnis der gewichtsmittleren Molmasse zur zahlenmittleren Molmasse $M_w/M_n$ bevorzugt $\leq 2,5$, besonders bevorzugt $\leq 2,2$ und ganz besonders bevorzugt $\leq 2,0$.

Die Konzentration des Homo- oder Copolymers in der wässrigen Lösung beträgt üblicherweise 10 bis 80 Gew. % bzgl. aller Bestandteile der wässrigen Lösung, bevorzugt 30 bis 55 Gew. % und besonders bevorzugt 35 bis 52 Gew. %. Sie werden bevorzugt direkt als Lösung verarbeitet.

Die erhaltenen flüssigen Polymerzusammensetzungen können optional durch verschiedene Trocknungsverfahren, wie z. B. Sprühtrocknung, Sprühwirbelschicht, Walzentrocknung oder Gefriertrocknung in Pulverform überführt werden. Bevorzugt wird die Sprühtrocknung eingesetzt. Die so erhaltenen Polymer-Trockenpulver lassen sich vorteilhafterweise durch Lösen in einem geeigneten Lösungsmittel erneut in eine Polymerlösung überführen.

Verwendung der Polymerlösungen:

Die nach dem erfindungsgemäßen Verfahren hergestellten Homo- oder Copolymere der Acrylsäure eignen sich besonders als Dispergiermittel für Pigmente. Dazu werden bevorzugt anorganische Pigmente wie z.B. Calciumcarbonat, Kaolin, Titandioxid, Zinkoxid, Zirkonoxid, Aluminiumoxid, etc verwendet. Besonders bevorzugt ist gemahlenes Calciumcarbonat (GCC). Das Ziel ist die Herstellung von wässrigen Suspensionen der oben genannten Pigmente (sogenannte Pigment-Slurries).

Die nach dem erfindungsgemäßen Verfahren hergestellten Homo- oder Copolymere der Acrylsäure können besonders bevorzugt zur Herstellung von Calciumcarbonat-Slurries eingesetzt werden, insbesondere als Mahlhilfsmittel für die Nassmahlung von Calciumcarbonat.

Das Calciumcarbonat kann dabei in natürlicher Form als Kalkstein, Kreide oder Marmor oder in synthetischer Form als gefälltes Calciumcarbonat vorliegen.

Die Mahlung wird kontinuierlich oder diskontinuierlich in wässriger Suspension durchgeführt. Der Calciumcarbonatgehalt liegt in dieser Suspension in der Regel bei $\geq 50$ Gew. %, bevorzugt bei $\geq 60$ Gew. % und besonders bevorzugt bei $\geq 70$ Gew. %. Üblicherweise werden, jeweils bezogen auf das in der Suspension enthaltene Calciumcarbonat, 0,1 bis 2 Gew. %, vorzugsweise 0,3 bis 1,5 Gew. %, der erfindungsgemäß zu verwendenden Polyacrylsäuren eingesetzt. Vorzugsweise haben in diesen Calciumcarbonat-Slurries nach der Mahlung 95 % der Teilchen eine Teilchengröße von kleiner als 2 $\mu$m und 75 % der Teilchen eine Teilchengröße von kleiner als 1 $\mu$m. Hierbei erfolgt die Dispergierung bzw. Mahlung besonders energieeffizient, und es lässt sich eine gleichmäßige Größenverteilung der Pigmente erreichen. Außerdem kann die Mahldauer reduziert werden, und die resultierende Suspension hat eine niedrige Viskosität. Die erhaltenen Calciumcarbonat-Slurries weisen ausgezeichnete rheologische Eigenschaften auf und sind auch nach 24stündiger Lagerung noch pumpfähig. Sie sind weiterhin langzeitstabil, d.h. der Anstieg der Viskosität mit der Zeit ist sehr gering.

Die unter Verwendung der nach dem erfindungsgemäßen Verfahren hergestellten Acrylsäurehomo- oder copolymere hergestellten Calciumcarbonat-Suspensionen können hervorragend als Weißpigmente bei der Papierherstellung und in Anstrichmitteln sowie als Füllstoffe in Thermoplasten eingesetzt werden. Gewünschtenfalls können sie vor der Anwendung durch verschiedene Trocknungsverfahren, z.B. Sprühtrocknung, Walzentrocknung oder Schaufeltrocknung, in Pulverform überführt werden.

Die erhaltenen Polyacrylsäure Homo- oder Copolymere können aber selbstverständlich auch für andere Zwecke verwendet werden, beispielsweise in Waschmitteln, Geschirrreinigern, technischen Reinigern, zur Wasserbehandlung oder als Ölfeldchemikalien.

Bevorzugte Apparatur zur Ausführung des erfindungsgemäßen kontinuierlichen Verfahrens:

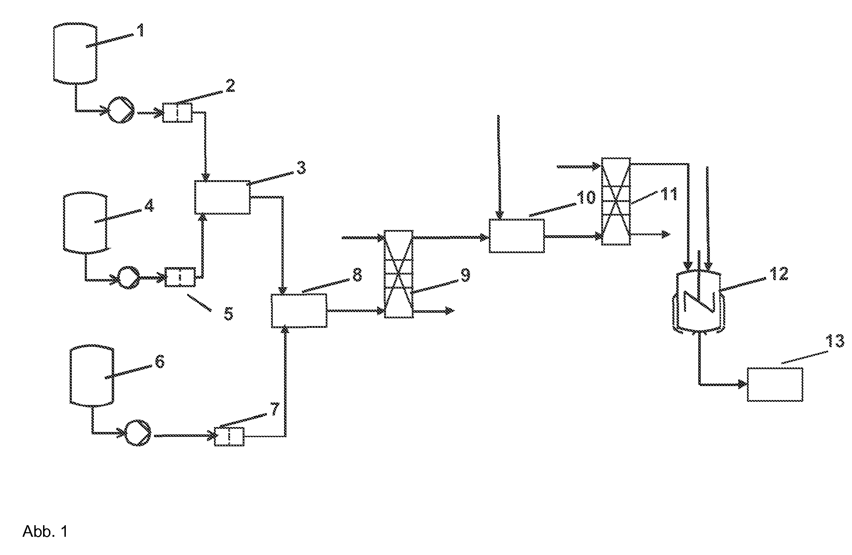

Eine bevorzugte Vorrichtung zur Ausführung der kontinuierlichen radikalischen Polymerisation wird anhand von Abb. 1 im Folgenden näher erläutert. Die Bezugszeichen haben dabei die nachfolgend genannte Bedeutung.

| | |
|---|---|
| 1 | Vorlagenbehälter |
| 2, | Filter |
| 3 | Mischer, optional mit Mikrostruktur |
| 4 | Vorlagenbehälter |
| 5 | Filter |

EP 2 496 611 B1

6    Vorlagenbehälter
7    Filter
8    Mischer mit Mikrostruktur
9    mikrostrukturierter Reaktor, temperierbar
10   Mischer, optional mit Mikrostruktur, temperierbar
11   Reaktor, optional mikrostrukturiert, temperierbar
12   Austragsbehälter mit Rührvorrichtung, temperierbar
13   Vorrichtung zum Abtrennen niedermolekularer Komponenten

Ein Gemisch aus Acrylsäure und Wasser sowie gegebenenfalls weiteren Comonomeren wird aus einem Vorlagenbehälter 1 mit üblichen Dosier- und Regeleinrichtungen über einen Filter 2 in einen Mischer 3 geführt. Der Mischer 3 kann optional als Mischer mit Mikrostruktur ausgeführt sein. Ein Initiator-Wasser-Gemisch wird aus einem Vorlagenbehälter 4 über übliche Dosier- und Regeleinrichtungen und einen Filter 5 ebenfalls in den Mischer 3 zugeführt. Im Mischer 3 werden die beiden flüssigen Stoffströme bei Umgebungstemperatur vermischt.

Das aus dem Mischer 3 erhaltene Gemisch wird in einen Mischer 8 zugeführt. Ein Regler wird aus einem Vorlagenbehälter 6 über übliche Dosier- und Regeleinrichtungen und einen Filter 7 ebenfalls in den Mischer 8 zugeführt. Der Mischer 8 ist als Mischer mit Mikrostruktur ausgeführt. Beide Stoffströme werden im Mischer 8 bei Umgebungstemperatur vermischt.

Beide Mischvorgänge können alternativ auch gemeinsam in einer Mischvorrichtung (3+8) durchgeführt werden.

An die Mischer 3 und 8 bzw. Mischvorrichtung (3+8) schließt sich ein mikrostrukturierter Reaktor 9 an, der temperierbar ist und bei nahezu konstanter Temperatur, d.h. weitgehend isotherm betrieben wird.

Dem Reaktor 9 kann optional ein dritter temperierbarer Mischer 10 nachgeschaltet werden, um Additive, weitere Initiator-Lösungen etc. zuzugeben. Der Mischer 10 kann gegebenenfalls als Mischer mit Mikrostruktur ausgeführt sein.

Ebenso optional kann dem dritten Mischer 10 ein weiterer temperierbarer Reaktor 11 nachgeschaltet sein. Dieser Reaktor 11 kann gegebenenfalls als mikrostrukturierter Reaktor ausgeführt sein.

Anschließend kann das Produkt in einen temperierbaren Austragsbehälter 12 mit optionaler Rührvorrichtung geleitet. Hier können gegebenenfalls weitere Additive etc. zudosiert werden.

In der anschließenden Vorrichtung 13 werden niedermolekulare Komponenten aus der Polymerlösung zumindest teilweise abgetrennt.

Die nachfolgenden Beispiele sollen die Erfindung näher erläutern:

Herstellung von Polyacrylsäure:

Polymer 1:

Eine wässrige Lösung von Acrylsäure (52 Gew. % Acrylsäure) wurde kontinuierlich mit einer 3 Gew. %-igen wässrigen Starter-Lösung (2,2'-Azobis[2-(2-imidazolin-2-yl)propan]dihydrochlorid) durch einen Mikromischer bei Raumtemperatur gemischt. Der Fluss der Acrylsäurelösung betrug hierbei 410 g/h und der der Starterlösung 36 g/h. Das erhaltene Gemisch wurde anschließend mit einem Strom von 43 g/h einer 20 Gew. %-igen wässrigen Lösung von Mercaptoethanol (Regler) mittels eines zweiten Mikromischers bei Raumtemperatur gemischt. Das erhaltene Reaktionsgemisch wurde anschließend durch zwei in Reihe geschaltete auf 80°C vorgewärmte Statischer- Mischer-Reaktoren mit einem Reaktionsvolumen von jeweils ca. 10 ml aus dem Material Edelstahl (1.4571) mit einer konstanten Flussrate gepumpt. Die Verweildauer der Reaktionsmischung in der Reaktionszone betrug etwa 2 ½ min. Nachfolgend wurde in einer in Reihe geschalteten und auf 80°C vorgewärmten Reaktionskapillare aus dem Material Edelstahl (1.4571) mit 3 mm Innendurchmesser und 10 m Länge die Neutralisation mit einer wässrigen Natronlauge Lösung (50 Gew. %) durchgeführt, wobei ein Fluss von 72 g/h eingestellt wurde. Die Eigenschaften der erhaltenen Polymere sind in Tabelle 1 zusammengefasst.

Die erhaltene Polyacrylsäurelösung wurde auf verschiedene Art und Weise nachbehandelt.

Polymere 2 bis 4:

Eine wässrige Lösung von Acrylsäure (ca. 44 Gew. % Acrylsäure) wurde kontinuierlich mit einer 3 Gew.%-igen wässrigen Starter-Lösung (Ammoniumperoxodisulfat) durch einen Mikromischer bei Umgebungstemperatur gemischt. Der Fluss der Acrylsäurelösung betrug hierbei 570 g/h und der Starterlösung 84 g/h. Das erhaltene Gemisch wurde anschließend mit einem Strom von 43 g/h einer ca. 59 Gew. %-igen wässrigen Lösung von Natriumhypophosphit (Regler) mittels eines zweiten Mikromischers bei Raumtemperatur gemischt. Das erhaltene Reaktionsgemisch wurde anschließend durch zwei in Reihe geschaltete und auf die gewünschte Versuchstemperatur vorgewärmte Statischer- Mischer-Reaktoren mit einem Reaktionsvolumen von jeweils ca. 10 ml aus dem Material Edelstahl (1.4571) mit einer konstanten

16

Flussrate gepumpt. Das erhaltene Gemisch wurde zur Vervollständigung der Reaktion in einer in Reihe geschalteten auf die entsprechende Versuchstemperatur vorgewärmten Reaktionskapillare aus dem Material Edelstahl (1.4571) mit 3 mm Innendurchmesser und 10 m Länge nachreagieren lassen. Die Verweildauer der Reaktionsmischung in der Reaktionszone einschließlich der Nachreaktionszone betrug etwa 3 ½ min Es wurden drei Versuche durchgeführt, und zwar mit einer Reaktionstemperatur von 80°C, 100°C und 120°C. Die Eigenschaften der erhaltenen Polymere sind in Tabelle 1 zusammengefasst.

Polymer 5:

Starter-Zwischendosierung nach der ersten Reaktionszone

Mikromischer bei Umgebungstemperatur gemischt. Der Fluss der Acrylsäurelösung betrug hierbei 570 g/h und der Starterlösung 84 g/h. Das erhaltene Gemisch wurde anschließend mit einem Strom von 43 g/h einer ca. 59 Gew. %-igen wässrigen Lösung von Natriumhypophosphit (Regler) mittels eines zweiten Mikromischers bei Raumtemperatur gemischt. Das erhaltene Reaktionsgemisch wurde anschließend durch zwei in Reihe geschaltete und auf die gewünschte Versuchstemperatur vorgewärmte Statischer- Mischer-Reaktoren mit einem Reaktionsvolumen von jeweils ca. 10 ml aus dem Material Edelstahl (1.4571) mit einer konstanten Flussrate gepumpt. Zusätzlich wurde zwischen den zwei in Reihe geschalteten Statischer-Mischer-Reaktoren wurde eine 3 Gew. %-ige wässrige Starter-Lösung (Ammoniumperoxodisulfat) in einem Strom von 42 g/h der Reaktionsmischung zudosiert. Das erhaltene Gemisch wurde zur Vervollständigung der Reaktion in einer in Reihe geschalteten auf die entsprechende Versuchstemperatur vorgewärmten Reaktionskapillare aus dem Material Edelstahl (1.4571) mit 3 mm Innendurchmesser und 10 m Länge nachreagieren lassen. Die Eigenschaften der erhaltenen Polymere sind in Tabelle 1 zusammengefasst.

Polymer 6:

Handelsübliche, mittels eines üblichen Batch-Verfahrens hergestellte wässrige Polyacrylsäure-Lösung. $M_n$ = 3950 g/mol, $M_w$ = 8300 g/mol, $M_w / M_n$ = 2,1.

Nachbehandlung:

Methode 1: Chemische Nachbehandlung mit Wasserstoffperoxid (Vergleich)

In einem 250 ml Rundkolben wurden146 g der wässrigen Lösung von Polymer 1 vorgelegt und unter Stickstoffatmosphäre im Ölbad auf 90°C aufgeheizt. Danach wurden 15 g wässrigen Lösung von Wasserstoffperoxid (50 Gew. %) zugegeben, 2 Stunden bei 90°C gerührt und anschließend auf Raumtemperatur abgekühlt.
Der Feststoffgehalt der Polymerlösung betrug dann 40,4 Gew. %; eine GPC Analyse ergab ein zahlenmittleres Molekulargewicht $M_n$ von 3300 g/mol und ein gewichtsmittleres Molekulargewicht $M_w$ von 6500 g/mol ($M_w/M_n$ = 2,0).

Methode 2: Physikalische Nachbehandlung durch Wasserdampfstrippen

In einem 500 ml Rundkolben wurden 100 g wässrigen Lösung von Polymer 1 vorgelegt und im Ölbad auf 100°C aufgeheizt. Über einen Teflonschlauch wurden innerhalb einer Stunde 600 g Wasserdampf (100°C) bei Atmosphärendruck in die Polyacrylsäurelösung geleitet und der austretende Brüden kondensiert. Anschließend wurde die Polymerlösung entnommen und in einem Rotationsverdampfer der gewünschte Feststoffgehalt (40%) eingestellt.

Methode 3 : Physikalische Nachbehandlung durch Ultrafiltration

Eine Membran (Roth - Zellutrans, 45 mm weit, 50 cm lang, 6,42 ml/cm Volumen, MWCO: Nominal 1000) wurde 20 min in voll entsalztem Wasser eingeweicht und anschließend abgespült. 100 g der der wässrigen Lösung von Polymer 1 wurden in die Schlauchmembran eingefüllt, verschlossen, und der verschlossene Schlauch in einen länglichen Eimer mit 5 l vollentsalztem Wasser gelegt. Nach 60 min wird dieses Wasser durch frisches ersetzt und für weitere 2,5 h stehen gelassen.
Anschließend wird der Schlauchinhalt entnommen und an einem Rotationsverdampfer auf ca. 40% des Ursprungsvolumens aufkonzentriert. Die Probe wird wieder in eine Schlauchmembran gefüllt und die Prozedur wiederholt.
Der gefundene Feststoffgehalt nach dem zweiten Ultrafiltrationsschritt betrug 25,3 Gew. %. Die Ergebnisse der Nachbehandlung sind in Tabelle 1 zusammengestellt.

<u>Verwendung als Mahlhilfsmittel:</u>

Zum Test der hergestellten Polyacrylsäurelösungen wird jeweils eine Vermahlung mit einem Dispermaten durchgeführt.

Hierfür werden jeweils 300 g Calciumcarbonat und 600 g Keramikperlen gemischt und in einem 500 ml Doppelwandgefäß (mit Leitungswasser gefüllt) vorgelegt. Anschließend werden 100 g einer wässrigen Polyacrylsäurelösung (3 Gew. % Polyacryläsure) der zu testenden Polyacrylsäure zugegeben. Die Mahlung erfolgt mittels eines Mahlaggregats vom Typ Dispermat AE-C (Hersteller VMA-Getzmann) mit einem Kreuzbalkenrührer bei einer Umdrehungszahl von 1200 U/min. Wenn 97% des Pigments eine Teilchengröße (TGV) von kleiner 1 $\mu$m besitzen, wird die Mahlung beendet (ca. 70 min, Gerät zur Bestimmung der TGV mittels Laserbeugung: Horiba Typ LA-920). Nach der Mahlung wird der Slurry zur Abtrennung der Keramikperlen über ein 780 $\mu$m-Filter mit Hilfe einer Porzellannutsche filtriert und der Feststoffgehalt der Slurry auf 77% eingestellt. Die Viskosität des Slurry wird sofort, nach 24 h und nach 168 h mit Hilfe eines Brookfield Viskosimeters DV II bestimmt (mit Spindel Nr. 3).

Prinzipiell gilt, dass gute anwendungstechnische Eigenschaften in Papierstreichfarben bei Pigmentsuspensionen vorliegen, bei denen mindestens 90% der Pigmentteilchen eine Teilchengröße von < 2$\mu$m aufweisen und die Suspension nach einer Lagerzeit von 24h noch pumpfähig sind.

Die Ergebnisse der Dispergierversuche sind in Tabelle 2 zusammengestellt.

<u>Diskussion der Ergebnisse</u>

Die Ergebnisse der Beispiele und Vergleichsbeispiele zeigen, dass die Kombination einer kontinuierlichen Herstellung von Polyacrylsäure gefolgt vom Abtrennen niedermolekularer Komponenten zu einer qualitativ besonders hochwertigen Polyacrylsäure führt. In Versuchen zur Dispergierung von Calciumcarbonat-Dispersionen führt die Verwendung dieser Polyacrylsäure zu $CaCO_3$-Dispersionen, welche eine besonders niedrige Viskosität aufweisen.

Schon die kontinuierliche Polymerisation alleine führt zu einer Dispersion mit einer deutlich niedrigeren Viskosität im Vergleich zu einer im Hinblick auf die molare Masse vergleichbare Polyacrylsäure, welche jedoch konventionell mittels Batch-Polymerisation hergestellt wurde.

Tabelle 1: Zusammenstellung der Ergebnisse der Polymerisationsversuche

| Beispiel Nr. | Eingesetztes Polymer | Polymerisationstemperatur | Nachbehandlungsmethode | Eigenschaften Polymer | | | Kommentar |
|---|---|---|---|---|---|---|---|
| | | | | $M_n$ [g/mol] | $M_w$ [g/mol] | $M_w / M_n$ | |
| Vergleichsbeispiel 1 | Polymer 1 | 80°C | - | 3300 | 6500 | 2,0 | Restmonomergehalt < 1000 ppm, starker Geruch |
| Vergleichsbeispiel 2 | Polymer 1 | 80°C | Methode 1 | | | | keine farbliche Veränderung der Polymerlösung, aber eine starke Verminderung des Geruchs. |
| Beispiel 1 | Polymer 1 | 80°C | Methode 2 | | | | keine farbliche Veränderung der Polymerlösung, aber eine starke Verminderung des Geruchs. |
| Beispiel) 2 | Polymer 1 | 80°C | Methode 3 | | | | keine farbliche Veränderung der Polymerlösung, aber eine starke Verminderung des Geruchs. |
| Beispiel 3 x | Polymer 2 | 80°C | - | 4700 | 14900 | 3,2 | Restmonomergehalt 2700 ppm |
| Beispiel 4 x | Polymer 3 | 100°C | - | 3300 | 10200 | 3,1 | Restmonomergehalt < 20 ppm |
| Beispiel 5 x | Polymer 4 | 120°C | - | 2900 | 8200 | 2,9 | Restmonomergehalt 2600 ppm |
| Beispiel 6 x | Polymer 5 | 120°C | - | - | - | - | Restmonomergehalt < 20 ppm |
| Vergleichsbeispiel 3 | Polymer 6 | | - | 3950 | 8300 | 2,1 | Konventionelle Herstellung im Batch-Verfahren Starker Geruch |
| Vergleichs-beispiel 4 | Polymer 6 | | Methode 1 | | | | Deutliche Verminderung des Geruchs |
| x nicht erfindungsgemäß | | | | | | | |

EP 2 496 611 B1

Tabelle 2: Ergebnisse der Calciumcarbonat-Dispergierung (n.b. nicht bestimmt)

| Beispiel Nr. | Eingesetztes Polymer | Nachbehandlungs-methode | Feststoffgehalt Slurry [%] | Teilchengrößen-Anteil [%] | | Viskosität [mPas] | | | |
|---|---|---|---|---|---|---|---|---|---|
| | | | | $< 1\mu m$ | $< 2\mu m$ | sofort | nach 1 h | nach 24 h | nach 168 h |
| Vergleichsbeispiel 1 | Polymer 1 | - | 77 | 98,2 | 100 | 201 | 289 | 373 | 722 |
| Vergleichsbeispiel 2 | Polymer 1 | Methode 1 Oxidation mit $H_2O_2$ | 77 | 97,5 | 99.6 | 209 | 376 | 667 | 1386 |
| Beispiel 1 | Polymer 1 | Methode 2 Dampfstrippen | 77 | 97,5 | 100 | 192 | 301 | 392 | 527 |
| Beispiel 2 | Polymer 1 | Methode 3 Ultrafiltration | 77 | 97,2 | 100 | 278 | 383 | 444 | 528 |
| Vergleichsbeispiel 3 | Polymer 6 | - | 77 | 98 | 100 | n.b. | n.b. | n.b. | 2981 |
| Vergleichsbeispiel 4 | Polymer 6 | Methode 1 Oxidation mit $H_2O_2$ | 77 | 98 | 100 | 157 | 392 | 2296 | > 5000 |

**Patentansprüche**

1.  Verfahren zur Herstellung von wässrigen Lösungen von Homo- oder Copolymeren der Acrylsäure mittels radikalischer Polymerisation von Acrylsäure sowie optional wasserlöslichen, monoethylenisch ungesättigten Comonomeren in wässrigem Medium in Gegenwart mindestens eines wasserlöslichen Initiators und mindestens eines wasserlöslichen Reglers, wobei

    - die Menge Acrylsäure mindestens 50 Gew. % bzgl. der Summe aller Monomere zusammen und
    - die zahlenmittlere molare Masse $M_n$ des Homo- oder Copolymers 1000 g/mol bis 20000 glmol beträgt,
    **dadurch gekennzeichnet, dass** man die Polymerisation mittels eines kontinuierlichen Verfahrens vornimmt, welches mindestens die folgenden Schritte umfasst:

    (la) kontinuierliches Eindosieren der Edukte sowie Wasser n eine Mischeinheit, umfassend mindestens einen Mischer mit Mikrostrukturen, wobei die charakteristische Dimension des Mischers (die kleinste, zur Strömungsrichtung senkrechte Ausdehnung) im Bereich von 1 $\mu$m bis 10000 $\mu$m liegt und Vermischen der Edukte in der Mischeinheit bei einer Temperatur $T_M$, sowie
    (Ib) kontinuierliche radikalische Polymerisation, indem man das erhaltene wässrige Reaktionsgemisch durch mindestens eine Reaktionszone mit Mikrostrukturen hindurchleitet, wobei die charakteristische Dimension der Reaktionszone (die kleinste, zur Strömungsrichtung senkrechte Ausdehnung) 0,1 mm bis 30 mm beträgt und die Reaktionszone von einem Temperiermedium einer Temperatur $T_{Soll}$ im Bereich von 10°C bis 200°C temperiert wird, wobei das Reaktionsgemisch in einem -in Strömungsrichtung gesehen- ersten Bereich der Reaktionszone aufgeheizt wird, und wobei nach dem Durchlaufen der Aufheizzone die Temperaturdifferenz $\Delta T$ zwischen der Temperatur $T_{Soll}$ und der tatsächlichen Temperatur $T_R$ an jedem Punkt der Reaktionszone nach der besagten Aufheizzone $|T_R - T_{Soll}| \leq 50$ K beträgt, mit der Maßgabe, dass $T_{Soll}$ größer ist als die Mischtemperatur $T_M$,

    und wobei man nach der Polymerisation in einem weiteren Verfahrensschritt (II) niedermolekulare Komponenten mit einer molaren Masse $M_n \leq 1000$ g/mol aus der erhaltenen, wässrigen Polymerlösung mittels physikalischer oder physikalisch-chemischer Trennmethoden ausgewählt aus der Gruppe von

    • Abtrennung durch Extraktion unter Verwendung von Wasserdampf, Inertgasen oder Lösemitteln,
    • Absorptionsmethoden,
    • chromatographische Methoden oder
    • osmotischen Methoden

    zumindest teilweise abtrennt.

2.  Verfahren gemäß Anspruch 1, **dadurch gekennzeichnet**, dann man in Schritt (la) mindestens eine Lösung von Acrylsäure in Wasser, eine Lösung mindestens eines Initiators in Wasser und mindestens einen Regler miteinander vermischt.

3.  Verfahren gemäß einem der Ansprüche 1 bis 2, **dadurch gekennzeichnet, dass** $T_{Soll}$ mindestens 10 K größer ist als $T_M$.

4.  Verfahren gemäß einem der Ansprüche 1 bis 3, **dadurch gekennzeichnet, dass** $T_M$ 10°C bis 30°C beträgt.

5.  Verfahren gemäß einem der Ansprüche 1 bis 4, **dadurch gekennzeichnet, dass** die Temperaturdifferenz $\Delta T = |T_R - T_{Soll}| \leq 20$ K ist.

6.  Verfahren gemäß einem der Ansprüche 1 bis 5, **dadurch gekennzeichnet, dass** $T_{Soll}$ 50°C bis 200°C beträgt.

7.  Verfahren gemäß einem der Ansprüche 1 bis 6, **dadurch gekennzeichnet, dass** bei Schritt (Ib) die Verweilzeit $t_R$ innerhalb der Reaktionszone 5 s bis 30 min beträgt.

8.  Verfahren gemäß einem der Ansprüche 1 bis 7, **dadurch gekennzeichnet, dass** in der mindestens einen Reaktionszone das Produkt aus Wärmeübergangskoeffizient und volumenspezifischer Wärmeübertragungsfläche größer als 12500 W/m$^3$K ist.

9. Verfahren gemäß einem der Ansprüche 1 bis 8, **dadurch gekennzeichnet, dass** man das Abtrennen flüchtiger Komponenten mittels Strippen mit Wasserdampf vornimmt.

10. Verfahren gemäß Anspruch 9, indem man Wasserdampf durch die siedende, wässrige Polymerlösung hindurch leitet.

11. Verfahren gemäß Anspruch 9 oder 10, **dadurch gekennzeichnet, dass** die Menge des hindurchgeleiteten Wasserdampfes 50 bis 1000 Gew. % bezogen auf die Menge der wässrigen Polymerlösung beträgt.

12. Verfahren gemäß einem der Ansprüche 1 bis 8, **dadurch gekennzeichnet, dass** man das Abtrennen flüchtiger Komponenten mittels Ultrafiltration unter Verwendung einer Membran, welche Stoffe mit einem $M_n$ von $\leq 1000$ g/mol abtrennen kann vornimmt.

13. Verfahren gemäß Anspruch 12, **dadurch gekennzeichnet, dass** man die Ultrafiltration bei einem Druck von 0,1 bis 50 bar durchführt.

14. Verfahren gemäß einem der Ansprüche 1 bis 13, **dadurch gekennzeichnet, dass** die Uneinheitlichkeit des Homo- oder Copolymers der Acrylsäure $M_w / M_n \leq 2,5$ ist.

15. Verfahren gemäß einem der Ansprüche 1 bis 14, **dadurch gekennzeichnet, dass** die Menge von Acrylsäure mindestens 95 Gew. % bzgl. der Summe aller Monomere zusammen beträgt.

## Claims

1. A process for preparing aqueous solutions of homo- or copolymers of acrylic acid by means of free-radical polymerization of acrylic acid and optionally water-soluble, monoethylenically unsaturated comonomers in an aqueous medium in the presence of at least one water-soluble initiator and of at least one water-soluble regulator, where

   - the amount of acrylic acid is at least 50% by weight based on the sum of all monomers together and
   - the number-average molar mass $M_n$ of the homo- or copolymer is 1000 g/mol to 20 000 g/mol,
   which comprises conducting the polymerization by means of a continuous process which comprises at least the following steps:

      (Ia) continuously metering the reactants and water into a mixing unit comprising at least one mixer with microstructures, where the characteristic dimension of the mixer (the smallest extent at right angles to the flow direction) is in the range from 1 $\mu$m to 10 000 $\mu$m, and mixing the reactants in the mixing unit at a temperature $T_M$, and
      (Ib) conducting continuous free-radical polymerization by passing the resulting aqueous reaction mixture through at least one reaction zone with microstructures, where the characteristic dimension of the reaction zone (the smallest extent at right angles to the flow direction) is 0.1 mm to 30 mm and the temperature of the reaction zone is controlled by a temperature control medium of temperature $T_{target}$ in the range from 10°C to 200°C, the reaction mixture being heated in a first - viewed in flow direction - region of the reaction zone, and, after passage through the heating zone, the temperature difference $\Delta T$ between the temperature $T_{target}$ and the actual temperature $T_R$ at any point in the reaction zone downstream of said heating zone, $|T_R - T_{target}|$, being $\leq 50$ K, with the proviso that $T_{target}$ is greater than the mixing temperature $T_M$, and wherein, after the polymerization, in a further process step (II), low molecular weight components with a molar mass $M_n \leq 1000$ g/mol are at least partly removed from the resulting aqueous polymer solution by means of physical or physicochemical separating methods selected from the group of

         • removal by extracting using steam, inert gases or solvents,
         • absorption methods,
         • chromatographic methods or
         • osmotic methods.

2. The process according to claim 1, wherein at least one solution of acrylic acid in water, a solution of at least one initiator in water and at least one regulator are mixed with one another in step (Ia).

3. The process according to either of claims 1 and 2, wherein $T_{target}$ is at least 10 K greater than $T_M$.

4. The process according to any of claims 1 to 3, wherein $T_M$ is 10°C to 30°C.

5. The process according to any of claims 1 to 4, wherein the temperature difference $\Delta T = |T_R - T_{target}|$ is $\leq$ 20 K.

6. The process according to any of claims 1 to 5, wherein $T_{target}$ is 50°C to 200°C.

7. The process according to any of claims 1 to 6, wherein the residence time $t_R$ within the reaction zone in step (Ib) is 5 s to 30 min.

8. The process according to any of claims 1 to 7, wherein the product of heat transfer coefficient and volume-specific heat transfer area in the at least one reaction zone is greater than 12 500 W/m$^3$K.

9. The process according to any of claims 1 to 8, wherein the removal of volatile components is conducted by means of stripping with steam.

10. The process according to claim 9, in which steam is passed through the boiling aqueous polymer solution.

11. The process according to claim 9 or 10, wherein the amount of steam passed through is 50 to 1000% by weight based on the amount of the aqueous polymer solution.

12. The process according to any of claims 1 to 8, wherein the removal of volatile components is conducted by means of ultrafiltration using a membrane which can remove substances with an $M_n$ of $\leq$ 1000 g/mol.

13. The process according to claim 12, wherein the ultrafiltration is conducted at a pressure of 0.1 to 50 bar.

14. The process according to any of claims 1 to 13, wherein the polydispersity of the homo- or copolymer of acrylic acid, $M_w/M_n$, is $\leq$ 2.5.

15. The process according to any of claims 1 to 14, wherein the amount of acrylic acid is at least 95% by weight based on the sum of all monomers together.


**Revendications**

1. Procédé pour la préparation de solutions aqueuses d'homopolymères ou de copolymères de l'acide acrylique par polymérisation radicalaire d'acide acrylique ainsi qu'éventuellement de comonomères solubles dans l'eau, éthyléniquement monoinsaturés, en milieu aqueux, en présence d'au moins un initiateur soluble dans l'eau et d'au moins un agent de régulation soluble dans l'eau,

- la quantité d'acide acrylique représentant au moins 50% en poids par rapport à tous les monomères ensemble et
- la masse molaire numérique moyenne $M_n$ de l'homopolymère ou du copolymère valant 1000 g/mole à 20.000 g/mole,
**caractérisé en ce qu'**on réalise la polymérisation au moyen d'un procédé continu, qui comprend au moins les étapes suivantes :

(Ia) dosage continu des produits de départ ainsi que d'eau dans une unité de mélange, comprenant au moins un mélangeur doté de microstructures, la dimension caractéristique du mélangeur (la plus petite grandeur perpendiculaire par rapport à la direction d'écoulement) se situant dans la plage de 1 $\mu$m à 10.000 $\mu$m et mélange des produits de départ dans l'unité de mélange à une température $T_M$, ainsi que
(Ib) polymérisation radicalaire continue, **en ce qu'**on fait passer le mélange réactionnel aqueux au travers d'au moins une zone de réaction dotée de microstructures, la dimension caractéristique de la zone de réaction (la grandeur la plus petite perpendiculaire à la direction d'écoulement) étant de 0,1 mm à 30 mm et la zone de réaction étant régulée en température par un agent de régulation thermique à une température $T_{cons}$ dans la plage de 10°C à 200°C, le mélange réactionnel étant chauffé dans une première partie - vue dans le sens d'écoulement - de la zone de réaction et la différence de température $\Delta T$, après le passage dans la zone de chauffage, entre la température $T_{cons}$ et la température réelle $T_R$ en tout point de la zone de réaction après ladite zone de chauffage $|T_R-T_{cons}|$ étant $\leq$ 50 K, à condition que $T_{cons}$ soit supérieure à la température de mélange $T_M$,

et les composants de bas poids moléculaire présentant une masse molaire $M_n \leq$ 1000 g/mole étant séparés au moins partiellement, après la polymérisation, dans une autre étape de procédé (II), de la solution aqueuse de polymères obtenue par des procédés physiques ou physico-chimiques de séparation, choisis dans le groupe constitué par

- séparation par extraction avec utilisation de vapeur d'eau, de gaz inertes ou de solvants,
- des procédés d'absorption,
- des procédés chromatographiques ou
- des procédés osmotiques.

2. Procédé selon la revendication 1, **caractérisé en ce que**, dans l'étape (Ia), on mélange, les uns avec les autres, au moins une solution d'acide acrylique dans l'eau, une solution d'au moins un initiateur dans l'eau et au moins un agent de régulation.

3. Procédé selon l'une quelconque des revendications 1 à 2, **caractérisé en ce que** $T_{cons}$ est supérieure d'au moins 10 K à $T_M$.

4. Procédé selon l'une quelconque des revendications 1 à 3, **caractérisé en ce que** $T_M$ vaut 10°C à 30°C.

5. Procédé selon l'une quelconque des revendications 1 à 4, **caractérisé en ce que** la différence de température $\Delta T$ = $|T_R-T_{cons}|$ est $\leq$ 20 K.

6. Procédé selon l'une quelconque des revendications 1 à 5, **caractérisé en ce que** $T_{cons}$ vaut 50°C à 200°C.

7. Procédé selon l'une quelconque des revendications 1 à 6, **caractérisé en ce que**, lors de l'étape (Ib), le temps de séjour $t_R$ dans la zone de réaction est de 5 s à 30 min.

8. Procédé selon l'une quelconque des revendications 1 à 7, **caractérisé en ce que**, dans ladite au moins une zone de réaction, le produit du coefficient de transfert thermique et de la surface de transfert thermique spécifique au volume est supérieur à 12.500 W/m$^3$K.

9. Procédé selon l'une quelconque des revendications 1 à 8, **caractérisé en ce qu'**on réalise la séparation de composants volatils par rectification à la vapeur d'eau.

10. Procédé selon la revendication 9, en ce qu'on fait passer de la vapeur d'eau au travers de la solution aqueuse de polymères en ébullition.

11. Procédé selon la revendication 9 ou 10, **caractérisé en ce que** la quantité de la vapeur d'eau passée dans la solution représente 50 à 1000% en poids par rapport à la quantité de la solution aqueuse de polymères.

12. Procédé selon l'une quelconque des revendications 1 à 8, **caractérisé en ce qu'**on réalise la séparation de composants volatils par ultrafiltration avec utilisation d'une membrane, qui peut séparer des substances présentant une $M_n \leq$ 1000 g/mole.

13. Procédé selon la revendication 12, **caractérisé en ce qu'**on réalise l'ultrafiltration à une pression de 0,1 à 50 bars.

14. Procédé selon l'une quelconque des revendications 1 à 13, **caractérisé en ce que** la dispersité de l'homopolymère ou du copolymère de l'acide acrylique $M_w/M_n$ est $\leq$ 2,5.

15. Procédé selon l'une quelconque des revendications 1 à 14, **caractérisé en ce que** la quantité d'acide acrylique représente au moins 95% en poids par rapport à la somme de tous les monomères.

Abb. 1

Abb. 2

Abb. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 313483 A1
- DE 3620149 A1
- US 6395813 B1
- DE 10311617 A1
- US 4509987 A
- US 5317053 A
- US 20040097674 A
- EP 2182011 A1
- DE 1248943
- DE 19621027 A1
- DE 19716373 A1
- EP 967232 A1
- US 5055197 A
- EP 1024150 A1
- EP 097495 A1
- EP 1500666 A2
- WO 2009133186 A1
- WO 2005018786 A1

**In der Beschreibung aufgeführte Nicht-Patentliteratur**

- **J. LOISEAU et al.** *Macromolecules,* 2003, vol. 36, 3066-3077
- **M. BAERNS ; H. HOFMANN ; A. RENKEN.** *Chemische Reaktionstechnik, Lehrbuch der Technischen Chemie,* vol. 1, 2, 339